# EUROPEAN PATENT SPECIFICATION

(11) **EP 2 954 420 B1**
(45) Date of publication and mention of the grant of the patent: **25.04.2018**
(21) Application number: 14749534.5
(22) Date of filing: 07.02.2014
(51) Int. Cl.: G06F 13/38, G06F 13/14, H04W 4/04, H04W 4/20

(54) **CONTEXT-RICH COMMUNICATION BETWEEN A DEVICE AND A VEHICLE**
INHALTSREICHE KOMMUNIKATION ZWISCHEN EINER VORRICHTUNG UND EINEM FAHRZEUG
COMMUNICATION RICHE EN CONTEXTE ENTRE UN DISPOSITIF ET UN VÉHICULE

(30) Priority: 08.02.2013 US 201313763261
(43) Date of publication of application: 16.12.2015
(73) Proprietor: Intel Corporation, Santa Clara, CA 95054 (US)
(72) Inventor: RAFFA, Guiseppe, Portland, Oregon 97229 (US); SHARMA, Sangita, Portland, Oregon 97229 (US); WAN, Chieh-Yih, Beaverton, Oregon 97006 (US); MUSE, Philip A., Folsom, California 95630 (US); NACHMAN, Lama, Santa Clara, California 95051 (US)
(74) Representative: HGF Limited
(86) International application number: PCT/US2014/015304
(87) International publication number: WO 2014/124260

(56) References cited:
- EP-A2- 2 131 553
- US-A1- 2004 093 154
- US-A1- 2004 093 154
- US-A1- 2006 129 283
- US-A1- 2008 250 117
- US-A1- 2009 298 482
- US-A1- 2009 306 834
- US-B2- 7 751 944

## Description

### BACKGROUND

Safety issues pervade communications between occupants of moving vehicles and their remote counterparts. Despite communication advances, such as hands-free devices and equipment, distraction of the vehicle occupant engaged in a voice communication, for example, remains a principal source for safety issues. For example, while an operator of a moving vehicle can mitigate or avoid handling communication equipment during a voice communication, and can be dedicated to operating the vehicle, the information exchange associated with the communication remains present and may promote the distraction of the vehicle operator.

Document EP 2131553 discloses a method for automated device and service configuration of vehicle device and application server for fleet management service, comprises updating context information profile, according to context changes of driver.

The invention is defined by the independent claims. Further embodiments are defined by the dependent claims.

### BRIEF DESCRIPTION OF THE DRAWINGS

The accompanying drawings are an integral part of the disclosure and are incorporated into the subject specification. The drawings illustrate example embodiments of the disclosure and, in conjunction with the description and claims, serve to explain at least in part various principles, features, or aspects of the disclosure. Certain embodiments of the disclosure are described more fully below with reference to the accompanying drawings. However, various aspects of the disclosure can be implemented in many different forms and should not be construed as limited to the implementations set forth herein. Like numbers refer to like elements throughout.
**FIGs. 1-2** present example operational environments in accordance with one or more aspects of the disclosure.
**FIGs. 3-4** present example call flows for vehicular context-rich communication in accordance with one or more aspects of the disclosure.
**FIG. 5** presents an example system in accordance with one or more aspects of the disclosure.
**FIG. 6** presents an example computing device in accordance with one or more aspects of the disclosure.
**FIG. 7** presents an example radio unit in accordance with one or more aspects of the disclosure.
**FIG. 8A** presents an example operational environment in accordance with one or more aspects of the disclosure.
**FIG. 8B** presents example computer-readable non-transitory storage media in accordance with one or more aspects of the disclosure.
**FIG. 9** presents another example operational environment in accordance with one or more aspects of the disclosure.
**FIGs. 10-11** present example methods in accordance with one or more aspects of the disclosure.

### DETAILED DESCRIPTION

The disclosure recognizes and addresses, in one aspect, the issue of safety in communications between occupants of moving vehicles and their remote counterparts. The disclosure provides devices, systems, techniques, and/or computer program products that render safer a communication between a caller within a vehicle and a callee located remotely, or vice versa. A vehicle can refer to a machine with autonomous mobility having an enclosure (e.g., a cabin) that accommodates at least one operator. Accordingly, for example, a vehicle can be a car, a yacht, an airplane, a locomotive engine, or the like. Such mobility can be provided by a combustion engine, a battery-operated motor, a combination thereof, or the like. The vehicle can include, in certain embodiments, one or more passengers. In the present disclosure, an operator or a passenger of a vehicle is referred to as an occupant of the vehicle. As described in greater detail below, in one aspect, the disclosure permits a cognitive load associated with such communication to be shared among the caller and the callee. The cognitive load can comprise vehicular context information that includes vehicle state information and/or operator state information. The vehicle state information can include information indicative of vehicular performance and/or information indicative or otherwise representative of a situation or environment of the vehicle. In addition, the operator state information can include information indicative or otherwise representative of actions that an operator of the vehicle can effect to operate the vehicle, behavior of the operator, mental condition of the operator, and/or physical condition of the operator. Accordingly, in another aspect, the disclosure provides a context-rich, immersive communication between the in-vehicle communicator (or local communicator) and the remote communicator, which can permit the remote communicator to perceive more compellingly the context of the local communicator and thus be more immersed in the local communicator's environment. In another aspect, the disclosure permits proactively creating safer vehicular operation by engaging the vehicle in communication with a remote communicator in response to vehicular contexts, such as driving situations or operator state, that are deemed unsafe. Such communication can be initiated without intervention of an occupant of the vehicle.

The disclosure provides various advantages over conventional technologies for communication between a device and vehicle. For example, one advantage is that a remote device in communication with a local device within the vehicle can emulate or otherwise generate a representation of the context of the vehicle, e.g., vehicle performance, vehicle environment, behavior of an occupant of the vehicle, environmental conditions, or the like. As described herein, generation of such representation can permit an end-user of the remote device in communication with the vehicle to transmit information to the local device in a manner that accounts for such context. Another example advantage is that communication devices described in the present disclosure can be aware of remote context-e.g., can access information indicative or otherwise representative of state of a vehicle and/or an occupant thereof-and can behave in a customized manner based at least on such context, whereas conventional technologies typically are "blind" to the situation on both domains of a communication session, such as a voice call and/or a data session.

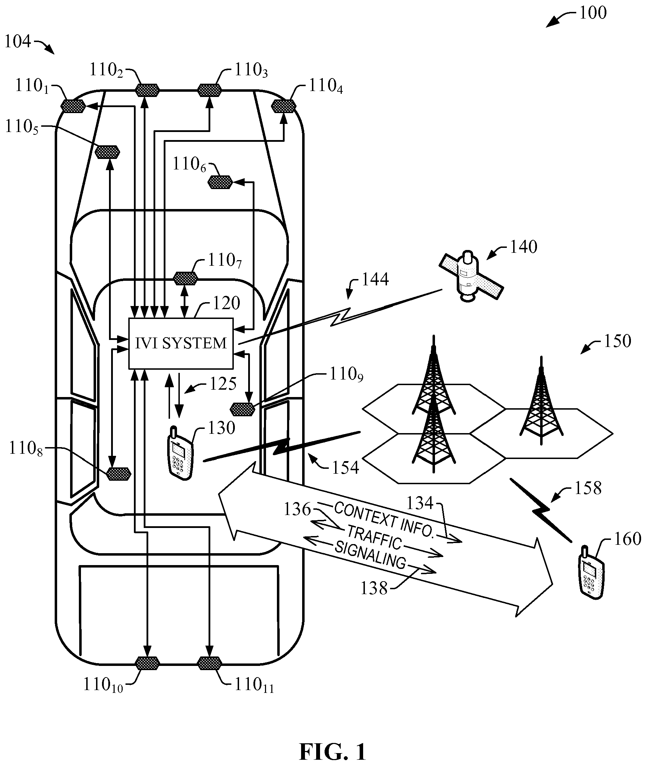

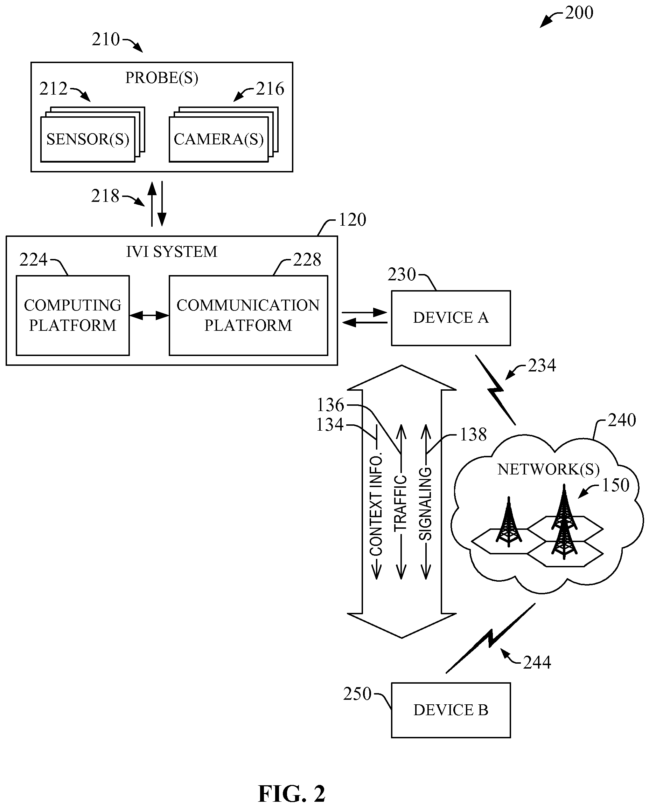

Referring to the drawings, **FIG. 1** presents an example operational environment 100 in accordance with one or more aspects of the disclosure. As illustrated, the operational environment 100 includes a vehicle 104 that has a group of probes 110₁-110₁₁ (e.g., sensor(s) and/or camera(s)) and an in-vehicle infotainment (IVI) system 120. The group of probes 110₁-110₁₁ can include at least one sensor (such as sonar sensor(s)) and/or at least one camera, such as a driver-facing camera, a front-facing camera, a rear-view camera, and/or a blind-spot camera. In addition, as illustrated, the group of probes 110₁-110₁₁ can be deployed (e.g., installed; configured; accepted; installed and accepted; configured and accepted; installed, configured, and accepted; or the like) within the cabin of the vehicle 104 (such as probes 110₇-110₉) or outside the cabin, including one or more sensors (e.g., probes 110₅ and 110₆) coupled to the engine of the vehicle 104 or other functional elements, such as the brakes or a system functionally coupled thereof (such as the anti-lock brake system), or the engine control unit (ECU). As described herein, one or more sensors included in the group of probes 110₁-110₁₁ can permit detection or otherwise detect the presence of an occupant of the vehicle 104, performance of the vehicle 104, and/or situational context of the vehicle 104 or occupant(s) thereof. As illustrated in **FIG. 2**, the group of probes 110₁-110₁₁ can generally be referred to as probe(s) 210, and can include one or more sensor(s) 212 and one or more camera(s) 216. It should be appreciated that while there are 11 probes in the group of probes 110₁-110₁₁, the disclosure is not so limited and substantially any number of probes can be contemplated. As illustrated in the operational environment 200, the probe(s) 210 can be distributed within the vehicle and can be functionally coupled (e.g., communicatively coupled) to the IVI system 120 via one or more links 218 that can comprise wired link(s), wireless link(s), or any combination thereof. In additional or alternative embodiments, at least a portion of the probe(s) 210 can be integrated into the IVI system 120.

At least another portion of the group of probes 110₁-110₁₁ can collect or can be configured to collect information indicative of behavior of an occupant of the vehicle 104, such as the operator of the vehicle or a passenger of the vehicle. Such information can be referred to as behavioral information and can comprise, for example, imaging information indicative of an appearance of the occupant of the vehicle. In such example, as described herein, one or more cameras (e.g., operator-facing cameras, which can be installed in the dashboard area of the vehicle 104) can be included in the group of probes 110₁-110₁₁, and can generate the imaging information. In addition or in the alternative, the behavioral information can comprise audio information indicative of a speech segment uttered by the operator of the vehicle. A microphone that is available (e.g., installed and properly functional) within the cabin of the vehicle (e.g., probe 110₈) can probe or collect the audio information. It should be appreciated that, in certain embodiments, such probe(s) can collect or otherwise access behavioral information directly from the vehicle via sensing that permits gleaning or otherwise extracting behavior of an occupant of the vehicle 104 (this sensing is referred to as "soft sensing"). For instance, information indicative or otherwise representative of sound system status (e.g., radio station or channel that is currently tuned or has been tuned at a certain time, content that is currently reproduced or has been reproduced at a certain time (such as radio channel or audio asset), volume at which at least a portion of the content is reproduced, a combination of the foregoing, or the like); window status (open or closed); door locks status; seat belts status (e.g., open or fastened); programmed or otherwise provided destination within the IVI system 120 or a navigation subsystem therein; distance to a destination; combinations of the foregoing; or the like.

Yet another portion of the group of probes 110₁-110₁₁ can collect or can be configured to collect information indicative or otherwise representative of a physical condition of an occupant (e.g., an operator) of the vehicle 104. Such physical condition can include vitals for the occupant of the vehicle 104, such as blood pressure, blood sugar concentration, heartbeat rate, a combination of the foregoing, or the like. Accordingly, in certain embodiments, the group of probes 110₁-110₁₁ can include in-cabin sensors (such as medical devices) for probing blood pressure, blood sugar concentration, toxin concentration (e.g., alcohol level), and/or heartbeat rate. At least some of these in-cabin sensors can be installed, for example, in the steering wheel of the vehicle 104. Information indicative of a physical condition of an occupant of the vehicle 104 can be referred to as wellness information.

As illustrated in the operational environment 100, the IVI system 120 can be functionally coupled to a device 130 via link(s) 125. The IVI system 120 also can be functionally coupled to a satellite network 140 via link(s) 144. The satellite network 140 can comprise several satellites and can permit the IVI system 120 to generate information that permits navigation of the vehicle 104. In addition or in the alternative, the device 130 can be functionally coupled to the satellite network 140 via a suitable wireless downstream link (DL; not shown). As illustrated in **FIG. 2**, a communication platform 228 can permit such functional coupling between the IVI system 120 and a device, such as device A 230, and/or one or more networks 240 which can include the macro-cellular network 150. The device A 230 can be functionally coupled to the one or more networks 240 via wireless links 234, which can be implemented in accordance with various radio technology protocols for wireless communication, such as 3rd Generation Partnership Project (3GPP) Universal Mobile Telecommunication System (UMTS), 3GPP Long Term Evolution (LTE), or the like.

In certain scenarios, the device 130 can be communicatively coupled to a device 160 via one or more networks. Such network(s) can permit wireless communication between the device 130 and the device 160. To at least such end, in one aspect, the network(s) can comprise a macro-cellular network 150 in which at least one base station (represented with a tower sketch in **FIG. 1**) is functionally coupled to the device 130 via link(s) 154 and at least one base station is functionally coupled to the device 160 via link(s) 158. During communication, the device 130 can exchange a variety of information with the device 160. The information can include traffic 136 and/or signaling 138. In addition, as illustrated, the device 130 can supply context information (info.) 134 to the device 160. In certain embodiments, the IVI system 120 can communicate context information 134 to the device 160 via the network 150 through suitable wireless links (not shown). In certain embodiments, e.g., embodiment 200 shown in FIG. 2, the device A 230 can communicate the context information 134, traffic 136, and/or signaling 138 to a device B 250 which can embody or can comprise the device 160. The device B 250 can be functionally coupled to the one or more networks 240 via wireless links 244, which can be implemented in accordance with various radio technology protocols for wireless communication, such as 3GPP UMTS, 3GPP LTE, or the like.

As described herein, the context information 134 can include vehicle state information and/or operator state information, where the vehicle state information can include information indicative of vehicular performance-such as data, metadata, and/or signaling indicative or otherwise representative of operating conditions of the vehicle-and/or information indicative or otherwise representative of a situation or environment of the vehicle. In addition, vehicle state information can comprise, for example, status of a sound system within the vehicle (e.g., radio station or channel that is currently tuned or has been tuned at a certain time, content that is currently reproduced or has been reproduced at a certain time (such as radio channel or audio asset), volume at which at least a portion of the content is reproduced, a combination of the foregoing, or the like); window status (open or closed); door locks status; seat belts status (e.g., open or fastened); programmed or otherwise provided destination within the IVI system 120 or a navigation subsystem therein; distance to a destination; vehicle engine condition; brakes condition; magnitude and/or direction of the acceleration of the vehicle; steering wheel position; and the like. Moreover, the operator state information can include information indicative or otherwise representative of actions that an operator of the vehicle can effect to operate the vehicle, behavior of the operator, and/or physical condition of the operator. Accordingly, for example, at least a portion of the context information can comprise one or more of state information indicative of a state of an occupant of the vehicle (e.g., an operator of the vehicle), situational information indicative of features of an environment in which the vehicle operates, or operating information indicative or otherwise representative of the performance of the vehicle. It should be appreciated that such context information may be information that can be sensed by an occupant of the vehicle 104, for example, from the passenger vantage point or other location within the vehicle interior.

Transmission of the context information 134 to the device 160 can permit, for example, rendering of at least a portion of such information or a representation thereof, and thus can create a rich, immersive communication session for an end-user that utilizes the device 160 for communication with an occupant of the vehicle 104 (such as the operator(s) of the vehicle 104) through the device 130. In addition or in the alternative, availability of at least a portion of the context information 134 at the device 160 can permit mitigation or avoidance of distraction to an occupant of the vehicle by permitting an end-user of the device 160 or the device 160 itself to establish the manner and/or specific times or periods of time in which speech or other information is to be delivered to the device 130, which can render the information that may be received to the occupant (e.g., the operator) of the vehicle 104. As an illustration, in a scenario in which the vehicle 104 approaches a traffic light that suddenly changes from green to yellow, the context information 134 can convey such environmental change to the device 160 which can render such change in environment thus creating situational awareness in the end-user of the device 160. In response to becoming immersed in the environment of the vehicle via the situational awareness, the end-user of the device 160 can refrain from talking or otherwise delivering audio to the occupant of the vehicle 104 that communicates via the device 130. This communication silence can permit or facilitate such occupant to take suitable action (e.g., actuating the brakes of the vehicle 104) in response to the foregoing traffic light change. In the present disclosure, the end-user that communicates via device 160 can be referred to as the remote communicator, and the occupant of the vehicle 104 that communicates via the device 130 can be referred to as the vehicular communicator.

In certain embodiments, at least a portion of the context information 134 can permit determination of the rate of exchange of traffic 136 between devices 130 and 160. For example, the IVI system 120, via one or more components therein, can generate a sequence of intervals in which exchange of information indicative of speech is permitted between the device 130 and the device 160. The sequence of intervals can include intervals in which the device 130 can transmit information indicative of speech to the device 160, and intervals in which the device 130 can receive information indicative of speech from the device 160. Such sequence of intervals can be transmitted to the device 160 and can permit the remote communicator to choose a suitable structure of utterances and/or silence periods in order to mitigate or avoid distraction to the vehicular communicator.

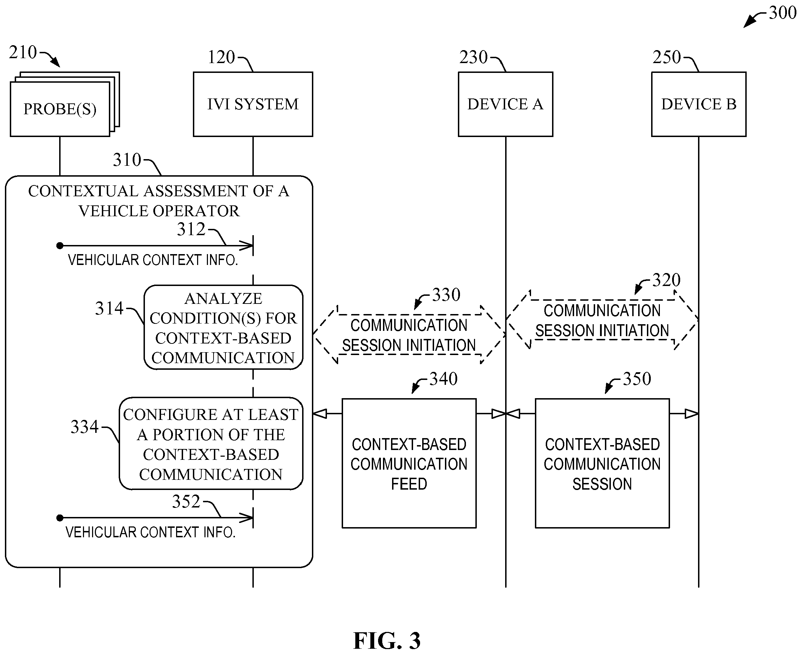

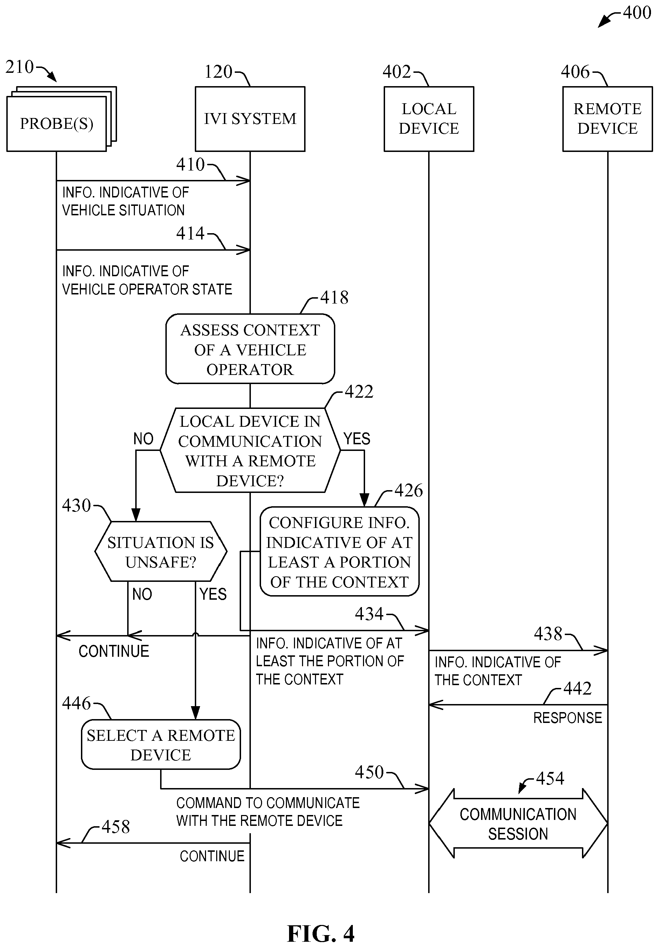

**FIG. 3** presents an example call flow 300 for vehicular context-rich communication between devices in accordance with one or more aspects of the disclosure. A vehicular context-rich communication can be or can comprise a communication session that can incorporate information indicative or representative of context of a vehicle, where the context can pertain to an environment of the vehicle and/or an operator of the vehicle, or to a state of the vehicle operator. At block 310, contextual assessment of a vehicle operator is performed. Such assessment can be performed on a nearly continuous basis, at specific intervals, or during a specific period. As part of the assessment, at least one of the probe(s) 210 can supply vehicular context information (info.) 312 to the IVI system 120. As described herein, at least a portion of the vehicular context information 312 can include vehicle state information and/or operator state information. One or more input/output (I/O) interfaces contained within the IVI system 120 can receive such information. In certain embodiments, as illustrated in example call flow 400 in **FIG. 4**, the vehicular context information can comprise information 410 indicative of vehicle situation and information 414 indicative of vehicle operator state. As described herein, the information 410 can comprise information indicative of vehicular performance and/or information indicative of the vehicle situation. In addition, in response to receiving at least a portion of the information 410 and at least a portion of the information 414, the IVI system 120 can assess context of a vehicle operator at block 418.

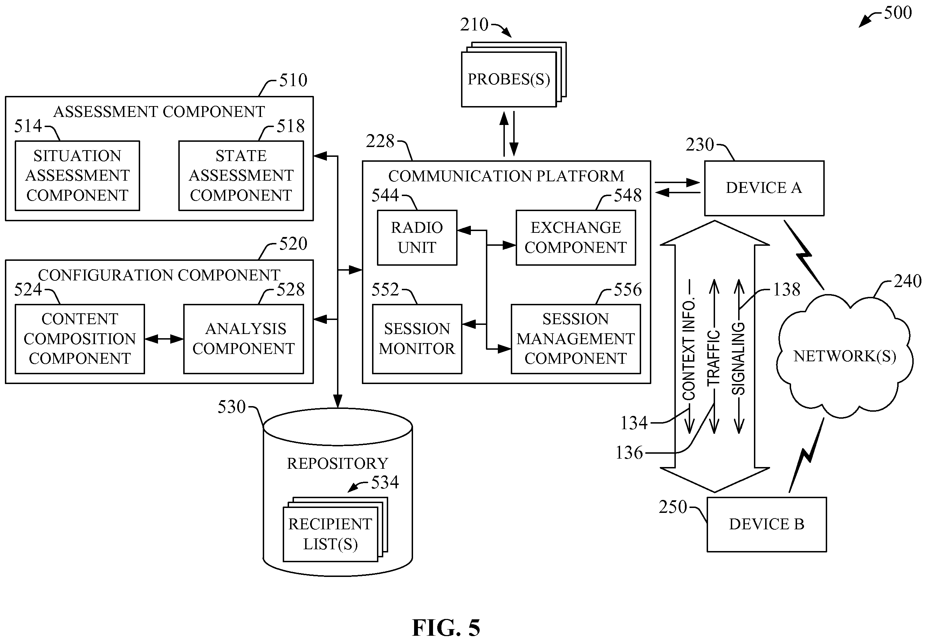

Further in connection with the example call flow 300, at block 314, the IVI system 120 can analyze one or more conditions for context-based communication. For instance, in certain scenarios, one of such conditions can include presence of a safety hazard condition. At least to determine the presence of the safety hazard condition, in one aspect, at least a portion of the vehicular context information can be analyzed to determine if at least one safety criterion is satisfied. The at least one safety criteria can be retained within a repository (e.g., repository 530 shown in **FIG. 5**) that is functionally coupled to or integrated into the IVI system 120. As an illustration, one or more safety hazards criteria can be embodied in or can include a frequency of swerving that is above a predetermined threshold; an inter-vehicle distance below recommended safety guidelines (e.g., 10 meters per 10 Km/h in vehicle velocity) that is sustained for a predetermined period; elevated frequency (e.g., frequency above a threshold) of switching between periods of acceleration and deceleration; sustained speed significantly above a speed limit; a combination thereof; or the like. Such criteria can be retained within a repository integrated into or functionally coupled to the computing platform 224. As illustrated, during analysis of the one or more conditions, a communication session may be initiated between the device A 230 and the device B 250, and information 320 associated with communication session initiation (e.g., session initiation request, acknowledgment, and the like) can be exchanged between such devices. The device A 230 can exchange communication information 330 with the IVI system 120 in order to convey that such device is in communication with the device B 250. For instance, as shown in example call flow 400, the analysis can include determining if the local device is in communication with a remote device at block 422.

In response to a condition for context-based communication being fulfilled, the IVI system 120, via or one or more components therein, can configure at least a portion of the context-based communication at block 334. In the example call flow 400 in **FIG. 4** such configuration is performed at block 426. In additional or alternative embodiments, in response to fulfillment of such condition, the IVI system 120 can instruct (e.g., transmit a directive or instruction to) the device A 230 to configure at least a portion of the context-based communication. Such configuration of the context-based communication can be specific to the condition that is fulfilled, and thus causes the configuration of the context-based communication. In a scenario in which the condition includes presence of a communication session between the device A 230 and the device B 250, or any other remote device, the configuration can comprise compression (e.g., lossy compression, non-lossy compression, or the like) of at least a portion of the vehicular context information 312. In addition or in the alternative, the configuration can comprise exclusion of certain portion of the vehicular context information 312. For instance, portions of the vehicular context information 312 that convey uneventful movement of the vehicle having the probe(s) 210 and the IVI system 120 can be removed. Moreover or as another alternative, the configuration can include identification of information indicative of an entity (e.g., a pedestrian, a vehicle, a portion of a street curb or a road shoulder, a road median reflective pin, and so on) within the vehicle context information 312.

In one implementation, the entity can be identified according to at least one of several computer-vision techniques for object recognition. It should be appreciated that in certain implementations (see for example call flow 400) in response to a local device (e.g., device A 230) being in communication with a remote device (e.g., device B 250), the IVI system 120 can configure information indicative of at least a portion of the context that can be generated as part of the assessment of context at block 418. In such a scenario, wherein the device A 230 is in communication with the device B 250, the IVI system 120 can supply context information to the device A 230 in response to the configuration of at least a portion of the context-based communication. As illustrated, the context information can be supplied within a context-based communication feed 340 (see also information 434 in **FIG. 4**). In additional or alternative embodiments, in response to the local device (e.g., device A 230) and the remote device (e.g., device B 250) being in communication, the IVI system 120 can instruct (e.g., transmit a directive or instruction) to the local device to configure at least a portion of the context-based communication. In such scenario, as illustrated, the device A 230 can inject at least a portion of the context-based communication feed 340 into the extant communication session with the device B 250, wherein such session can be represented as context-based communication session 350. In the embodiment illustrated at **FIG. 4****,** a local device 402 can transmit information 438 indicative of the context to a remote device 406. In certain implementations, the remote device 406 can transmit a response 442 (e.g., an acknowledgement (ACK) or specific data) in order to convey, for example, that at least a portion of the information 438 has been received or it has failed to be received at the remote device 406. In addition, based at least on the response 442, the local device 402 can retransmit at least the portion of the information 438. In other implementations, the response 442 is not communicated.

In a scenario in which the device A 230 is not in communication with a remote device (e.g., device B 250) and the condition that is fulfilled is a safety hazard condition associated with a state of the operator of the vehicle that contains the IVI system 120 (e.g., vehicle 104), configuration of at least the portion of the context-based communication at block 334 can comprise selection of a destination device and transmission of a communication instruction to the device A 230. In one aspect, the communication instruction can direct the device A 230 to establish a communication session with the destination device (e.g., device B 250), which can be associated with the device A 230. In another aspect, the communication instruction can direct the device A 230 to transmit a message to the destination device. The message can be embodied in or can comprise one or more of an unstructured supplementary service data (USSD) message, a short message service (SMS), or a multimedia message service (MMS). In addition or in the alternative, the message can be conveyed within dedicated signaling, such as dedicated pilot signals, in the form of a light-payload (e.g., 1-3 bytes) packet, a predetermined multi-bit word conveyed in a radio frame within a control channel, or the like. As illustrated in **FIG. 4**, the safety condition can represent or can be indicative of a situation that is unsafe with respect to operation of the vehicle. For example, the situation can be that an operator of the vehicle is fatigued or drowsy. For another example, the situation can be that the operator of the vehicle is operating the vehicle hazardously (e.g., the vehicle is well above the speed limit). As described herein, in response to determination of the presence of an unsafe situation at block 430, the IVI system 120 can select a remote device (e.g., remote device 406) at block 446 and, in further response, can transmit a command 450 to communicate with the remote device. In response to receiving the command, the local device 402 can establish a communication session 454 with the remote device 406, which can be selected for communication. In addition, the IVI system 120 can transmit signaling to at least a probe to continue providing (e.g., generating and transmitting) information indicative of state of a vehicle (such as vehicular performance, vehicle situation, or both) and/or information indicative of state of an occupant of the vehicle.

In connection with FIG. 3, it should be appreciated that the additional vehicular context information 352 can be collected or otherwise acquired at the IVI system 120 as part of block 310. Similarly, it should further be appreciated that blocks 314 and 334 can be reiterated in response to (e.g., upon or after) collection of the vehicular context information 352.

**FIG. 5** illustrates a block diagram of an example system 500 in accordance with at least certain aspects of the disclosure. As illustrated, the example system 500 comprises an assessment component 510 that can generate information indicative of context of a vehicle (e.g., vehicle 104). To at least such end, in one aspect, the assessment component 510 can receive information (data, metadata, and/or signaling) indicative of state of the vehicle and/or state of an occupant of the vehicle (e.g., an operator of the vehicle), and can analyze at least a portion of such information (referred to as vehicle state information) in order to generate at least (i) situational information associated with the occupant of the vehicle and/or (ii) state information indicative of a state of such occupant. In certain embodiments, as part of the analysis yielding such situational information, the assessment component 510 can operate (e.g., aggregate, select a specific portion, or the like) on at least a portion of information indicative of the state of the vehicle and/or the state of the occupant of the vehicle and, in response, can generate an information structure indicative of the situational information. For instance, the information structure can be a data object (such as a scalar metric, a vector metric, etc.) that is indicative or otherwise representative of operating condition(s) of the vehicle, location of the vehicle, and/or environmental feature(s) (e.g., presence of other vehicles; presence of pedestrians; specific terrain, such as dirt road, proximity to an intersection, highway road; or the like). In other embodiments, as part of the analysis yielding the state information indicative of the state of the occupant of the vehicle, the assessment component 510 can apply artificial intelligence (AI) techniques to at least a portion of the information indicative of state of the vehicle and/or state of an occupant of the vehicle in order to infer (e.g., draw a conclusion from available information) and thus determine the state of the occupant. For example, the assessment component can determine such a state from behavioral information and/or physical information of the occupant of the vehicle. Artificial intelligence can be implemented via various techniques that permit identification of a specific context or action, or generation of a probability distribution of specific states of a system without human intervention. In certain implementation, the AI can comprise advanced mathematical algorithms-e.g., decision trees, neural networks, regression analysis, cluster analysis, genetic algorithm, and reinforced learning-that can be applied to specific information associated with an operation environment, such as a system or a platform. In one aspect, the assessment component 510 can utilize at least one of numerous methodologies for learning from information (e.g., data and/or metadata) and then generating inferences from the models so constructed, e.g., Hidden Markov Models (HMMs) and related prototypical dependency models; more general probabilistic graphical models, such as Bayesian networks created by structure search using a Bayesian model score or approximation; linear classifiers, such as support vector machines (SVMs); non-linear classifiers, such as methods referred to as "neural network" methodologies, fuzzy logic methodologies; and the like.

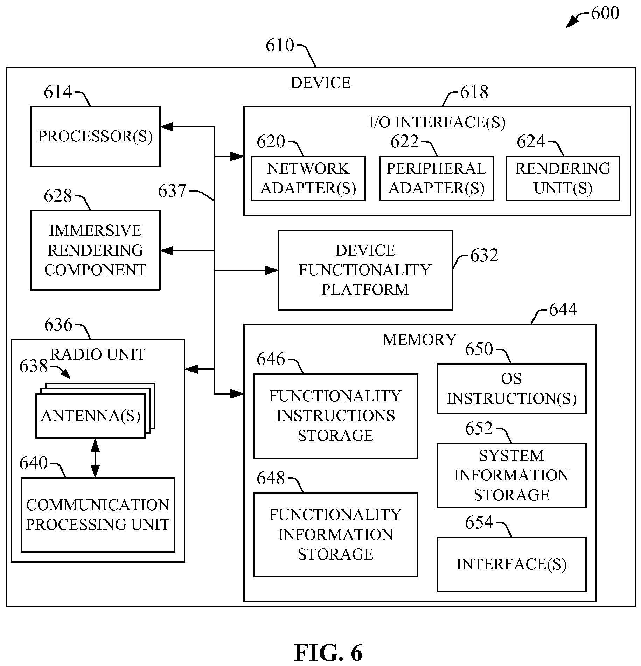

In one scenario, for example, the assessment component 510 can receive the information indicative of vehicular performance and/or vehicular situation from a communication platform 228, which can receive at least a portion of such information from the one or more probes 210. In one aspect, the communication platform 228 can comprise an exchange component 548 that can interface with the probe(s) 210 and can receive data, metadata, and/or signaling from at least one of the probe(s) 210. For example, in an embodiment in which at least one of the probe(s) 210 is or includes a camera, the exchange component 548 can receive imaging information from at least such camera. The imaging information can include a video stream conveying vehicular information from a specific vantage point (e.g., driver-facing camera). The video stream can be received in digital format or in analog format. In one implementation, the exchange component 548 can process information (e.g., data, metadata, and/or signaling) from the probe(s) 210 in order to condition (e.g., format, aggregate, or otherwise operate on) such information for consumption at the assessment component 510. In other scenarios, for example, the assessment component 510 can receive vehicle state information and/or operator state information directly from at least one of the probe(s) 210. In one aspect, at least one probe can supply (e.g., transmit) imaging information as described herein to the assessment component 510, which can condition or otherwise process such information. In addition, the communication platform 228 can include a radio unit 544 that can permit wireless communication between the communication platform 288 and a device, such as device A 230. The radio unit 544 can include one or more antennas and a communication processing unit in accordance with various aspects of the disclosure (see, e.g., radio unit 636 in **FIG. 6** and related description).

As illustrated, the assessment component 510 can include a situation assessment component 514 that can generate the situational information, and a state assessment component 518 that can generate the state information. In one aspect, the situation assessment component 514 can determine that the vehicle is in hazardous situation by analyzing data received from one or more sensors (e.g., a sonar sensor; a satellite navigation receiver, such as a global positioning system (GPS) receiver or a GLONASS (*Globalnaya Navigatsionnaya Sputnikovaya Sistema*) receiver; or the like) contained in the probe(s) 210. For example, the vehicle can be approaching a traffic-heavy intersection or other vehicles may be moving in close proximity to the vehicle or in the passing lane. It should be appreciated that the hazardous situation may not be perceived by a remote communicator.

In another aspect, to generate at least a portion of the state information the state assessment component 518 can analyze imaging data originated in a driver-facing camera and can detect, based at least on computer vision techniques (such as face recognition and tracking, eye gaze tracking, and/or feature extraction techniques), eye closing, yawning, excessive blinking, any combination thereof, or other signs of fatigue or drowsiness. Criteria for detection of such features can be retained within one or more memory elements (not shown) in the repository 530. In a scenario in which the device A 230 and the device B 250 are in communication, detection of such features associated with the operator state can be conveyed to the device B 250 as part of the communication. The session monitor 552 can determine if the device A 230 and the device B 250 are in communication. In a scenario in which such features are indicative of fatigue or drowsiness are detected and the device A 230 is not in communication with the device B 250, the situation assessment component 514 can signal the session management component 556 to initiate a communication between the device A 230 and the device B 230. To at least such end, in one implementation, the session management component 556 can access a list of remote communicators (or recipients) that are registered with the IVI system 120 to receive a safety communication from the device A 230 when the operator of the vehicle is in an unsafe state. The list of remote communicators can be retained within one or more memory elements 534 (labeled as recipient list(s) 534) in repository 530. In addition, the session management component 556 can determine a satisfactory remote communicator (or recipient) to be contacted based at least on availability and/or situation of the remote communicator. In response to selection of a suitable remote communicator, the session management component 556 can transmit a command to the device A 230 to initiate a communication (e.g., initiate a voice call) with a remote device (e.g., device B 250) associated with the remote communicator. Establishment of such communication session can permit the remote communicator and the local communicator to engage in conversation in order to remove the local communicator from the unsafe state and permit the local communicator to find a location to rest or otherwise safely stop operating the vehicle. In addition or in the alternative, in response to selection of the remote communicator, the session management component 556 can transmit a command to the device A 230 to transmit an alert message (e.g., a SMS message, a MMS message, or the like) to the device B 250.

The assessment component 510 can convey at least a portion of the situational information and/or at least a portion of the state information to a configuration component 520. In one aspect, the configuration component 520 can process the information that is received. To at least such end, for example, the configuration component 520 can compress the information in order to produce data, metadata, and/or signaling that is suitable for communication to the device A 230 or any other device that is functionally coupled (e.g., attached) to the communication platform 228. In one aspect, the communication platform 228 can determine, via a session monitor 552, for example, an amount of communication resources available to the device A 230, and can convey information indicative of an amount of communication resources (bandwidth, number of communication channels, and the like) to the configuration component 520. In response, the content composition component 524 can establish, via an analysis component 528, for example, a degree and/or type of compression (e.g., lossy or non-lossy) suitable for transmission according to the amount of communication resources. The degree and/or type of compression can be suitable for achieving satisfactory (e.g., optimal or nearly-optimal) transmission of the situational information to a device functionally coupled to the communication platform 228. In one aspect, the content composition component 524 can compress at least the portion of the situational information and/or at least the portion of the state information in accordance with such degree and/or type. Information, such as data, metadata, code instructions, for implementation of an information compression technique can be retained within the repository 530. In addition or in the alternative, in a scenario in which the amount of communication resources is below a predetermined threshold or otherwise limited, the content composition component 524 can generate a simplified, yet realistic, representation of the situational information and/or imaging data, such as a content stream or other media assets.

In certain implementations, the analysis component 528 can determine relevancy of certain features, such as entities, identified in the situational information that is received from the assessment component 510. In one aspect, relevancy can be dictated, for example, by the fidelity of the extraction of a feature within imaging data provided by one or more cameras contained in the probe(s) 210. In response to such determination, the configuration component 520 can label or otherwise mark certain relevant features (e.g., the most relevant feature, the two most relevant features, or the like) as part of composition of a content stream for delivery to the device A 230, and for delivery, by the device A 230, to the device B 250. In scenarios in which situational information received at the configuration component 520 conveys that no relevant events or features are present, the content composition component 524 can remove such information from a content stream or other media asset that can be transmitted to the device A 230 and, in turn, to the device B 250 from the device A 230.

In certain scenarios, situation information generated by the situations assessment component 514 can be utilized, at least in part, to generate a recommendation for structuring a conversation between local communicator (e.g., end-user associated with the device A 230) and a remote communicator (e.g., end-user associated with the device B 250). As described herein, the recommendation can comprise a sequence of intervals in which exchange of information indicative of speech is permitted between the device 130 and the device 160.

It should be appreciated that in certain embodiments at least a portion of the assessment component 510 and at least a portion of the configuration component 520 can be integrated into a single component having the functionalities described herein.

**FIG. 6** illustrates a block-diagram of an example embodiment 600 of a device that communicates in accordance with at least certain aspects of the subject disclosure. As illustrated the device 610 can include an immersive rendering component 628 that can receive at least a portion of the context information 134, such as situational information, received from the IVI system 120, via the communication platform 228, for example. In one aspect, the immersive rendering component 628 can decompress or otherwise process at least the portion of the context information 134. Moreover or as another alternative, the immersive rendering component 628 can format at least the portion of the context information 134 in a manner suitable for rendering it via at least one of the rendering unit(s) 624. In addition or in the alternative, the immersive rendering component 628 can configure one or more of the rendering unit(s) 624 to convey at least the portion of the context information 134. In one aspect, such information can be conveyed visually or aurally. In a scenario in which the context information 134 includes a stereophonic audio signal, the immersive rendering component 628 can receive or otherwise acquire such signal, and can configure an audio component that can be contained in the rendering unit(s) 624 to playback the stereophonic audio signal. In such a scenario, the device 610 can render audio indicative of the sounds to which an occupant of a vehicle (e.g., vehicle 104) that originates the context information 134 is exposed. As an illustration, if such vehicle is approached by another vehicle from the left side, the audio component of the device 610 can render sound that permits an end-user to perceive that the other vehicle is approaching from the left side of the operator of the vehicle that is being approached. It should be appreciated that, in certain embodiments, a visual representation of the other vehicle approaching from the left can be rendered at one or more of the rendering unit(s) 624 (e.g., one or more display units). Availability of such stereophonic and/or visual rendering can permit the device 610 to produce a context-rich, immersive communication between the device 610 and a device local to the vehicle at which the context information 134 is generated. The context-rich, immersive communication can permit an end-user of the device 610 to regulate utterances and periods of silence (or pauses) in a conversation that is contained in the communication. In other scenarios in which the context information 134 includes imaging information, the immersive rendering component 628 can configure a rendering unit of the rendering units 624 to render indicia or other visual representation of an approaching vehicle.

In another aspect, the context information 134 or a portion thereof can be conveyed via tactile feedback on the device 610. For instance, the immersive rendering component 628 can configure a rendering unit of the rendering unit(s) 624 to provide (e.g., generate and provide) a haptic stimulus that conveys acceleration or deceleration of the vehicle at which the context information 134 is generated. It should be appreciated that acceleration (e.g., actuation of a throttle that can yield increased speed) and deceleration (e.g., break actuation activity that reduces speed of the vehicle) can have respective forms of haptic stimulus implemented by at least one of the rendering unit(s) 624. Similarly, the immersive rendering component 628 can configure one of the rendering unit(s) 624 to provide a haptic stimulus that conveys that the vehicle that generated the context information 134 is turning. For instance, a haptic stimulus at the left side of a housing (not shown) of the device 610 can convey that such vehicle is turning left, whereas a haptic stimulus at the right side of such housing can convey that the vehicle is turning right. It should be appreciated that, in certain embodiments, information indicative of acceleration or deceleration can be conveyed visually and/or aurally via indicia rendered in one or more of the rendering units 624. For example, a display unit can convey indicia indicative or otherwise representative of magnitude and direction of the acceleration or deceleration. It should further be appreciated that the disclosure distinguishes between acceleration and deceleration to clearly distinguish between rates of change of speed that represent an increase in speed and a decrease in speed of a vehicle, respectively.

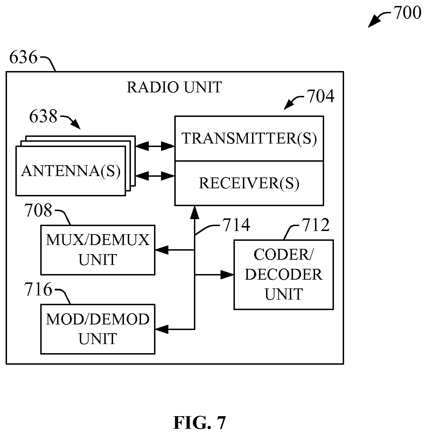

The device 610 can operate as a wireless device and can embody or can comprise a communication device of the disclosure, such as device 130 or device 160. To permit wireless communication with a device (e.g., device 160 or device A 230), in one aspect, the device 610 includes a radio unit 636 having one or more antennas 638 and a communication processing unit. The radio unit 636 can comprise or can embody the radio unit 544. In one embodiment, e.g., example embodiment 700 shown in **FIG. 7**, the radio unit 636 can comprise a set of one or more transmitters/receivers 704, and components therein (amplifiers, filters, etc.), functionally coupled to a multiplexer/demultiplexer (mux/demux) unit 708, a modulator/demodulator (mod/demod) unit 716 (also referred to as modem 716), and a coder/decoder unit 712 (also referred to as codec 712). Each of the transmitter(s)/receiver(s) 704 can form respective transceiver(s) that can transmit and receive wireless signal (e.g., electromagnetic radiation) via the one or more antennas 638.

Electronic components and associated circuitry, such as mux/demux unit 708, codec 712, and modem 716 can permit or facilitate processing and manipulation, e.g., coding/decoding, deciphering, and/or modulation/demodulation, of signal(s) received by the device 610 and signal(s) to be transmitted by the device 610. In one aspect, received and transmitted wireless signals can be modulated and/or coded, or otherwise processed, in accordance with one or more radio technology protocols (e.g., 3rd Generation Partnership Project (3GPP) Universal Mobile Telecommunication System (UMTS), 3GPP Long Term Evolution (LTE), or the like).

The electronic components in the described radio unit 636, including the one or more transmitters/receivers 704, can exchange information (e.g., data, metadata, code instructions, signaling and related payload data, combinations thereof, or the like) through a bus 714, which can embody or can comprise at least one of a system bus, an address bus, a data bus, a message bus, a reference link or interface, a combination thereof, or the like. Each of the one or more transmitters/receivers 704 can convert signal from analog to digital and vice versa. In addition or in the alternative, the transmitter(s)/ receiver(s) 704 can divide a single data stream into multiple parallel data streams, or perform the reciprocal operation. Such operations may be conducted as part of various multiplexing schemes. As illustrated, the mux/demux unit 708 is functionally coupled to the one or more transmitters/receivers 704 and can permit processing of signals in time and frequency domain. In one aspect, the mux/demux unit 708 can multiplex and demultiplex information (e.g., data, metadata, and/or signaling) according to various multiplexing schemes such as time division multiplexing (TDM), frequency division multiplexing (FDM), orthogonal frequency division multiplexing (OFDM), code division multiplexing (CDM), or space division multiplexing (SDM). In addition or in the alternative, in another aspect, the mux/demux unit 708 can scramble and spread information (e.g., codes) according to most any code, such as Hadamard-Walsh codes, Baker codes, Kasami codes, polyphase codes, and the like. The modem 716 can modulate and demodulate information (e.g., data, metadata, signaling, or a combination thereof) according to various modulation techniques, such as frequency modulation (e.g., frequency-shift keying), amplitude modulation (e.g., M-ary quadrature amplitude modulation (QAM), with M a positive integer; amplitude-shift keying (ASK)), phase-shift keying (PSK), and the like). In addition, the processor(s) 614 can permit the device 610 to process data (e.g., symbols, bits, or chips) for multiplexing/demultiplexing, modulation/demodulation (such as implementing direct and inverse fast Fourier transforms), selection of modulation rates, selection of data packet formats, inter-packet times, and the like.

The codec 712 can operate on information (e.g., data, metadata, signaling, or a combination thereof) in accordance with one or more coding/decoding schemes suitable for communication, at least in part, through the one or more transceivers formed from respective transmitter(s)/receiver(s) 704. In one aspect, such coding/decoding schemes, or related procedure(s), can be retained as a group of one or more computer-accessible instructions (computer-readable instructions, computer-executable instructions, or a combination thereof) in memory 644. In a scenario in which wireless communication among the device 610 and a device (e.g., device 160) utilizes multiple-input multiple-output (MIMO), multiple-input single-output (MISO), single-input multiple-output (SIMO) or single-input single-output (SISO) operation, the codec 712 can implement at least one of space-time block coding (STBC) and associated decoding, or space-frequency block coding (SFBC) and associated decoding. In addition or in the alternative, the codec 712 can extract information from data streams coded in accordance with spatial multiplexing scheme. In one aspect, to decode received information (e.g., data, metadata, signaling, or a combination thereof), the codec 712 can implement at least one of computation of log-likelihood ratios (LLR) associated with constellation realization for a specific demodulation; maximal ratio combining (MRC) filtering, maximum-likelihood (ML) detection, successive interference cancellation (SIC) detection, zero forcing (ZF) and minimum mean square error (MMSE) estimation detection, or the like. The codec 712 can utilize, at least in part, mux/demux unit 708 and mod/demod unit 716 to operate in accordance with aspects described herein.

The device 610 can operate in a variety of wireless environments having wireless signals conveyed in different electromagnetic radiation (EM) frequency bands. To at least such end, the communication processing unit 640 can process (code, decode, format, etc.) wireless signals within a set of one or more EM frequency bands (also referred to as frequency bands) comprising one or more of radio frequency (RF) portions of the EM spectrum, microwave portion(s) of the EM spectrum, or infrared (IR) portion(s) of the EM spectrum. In one aspect, the set of one or more frequency bands can include at least one of (i) all or most licensed EM frequency bands, or (ii) all or most unlicensed frequency bands currently available for telecommunication.

In the example embodiment 700, the device 610 comprises one or more processors 614 that can permit, at least in part, functionality of one or more functional elements of the device 610 in accordance with at least certain aspects described herein. While in embodiment 600, the one or more processors 614 are illustrated as external to the various functional elements (e.g., component(s), interface(s), platform(s), node(s)) of the device 610, in an additional or an alternative embodiment, the one or more processors 614 can be distributed among a plurality of such functional elements. The one or more processors 614 can be functionally coupled a memory 644 and to each functional element within the device 610 via bus 637. In certain implementations, the bus 637 can be embodied in one or more of: a memory bus, a system bus, an address bus, a message bus, a power bus, or one or more reference links or interface(s).

In one aspect, the memory 644 can contain one or more memory elements 646 having computer-accessible instructions encoded thereon. The one or more memory elements 646 are referred to as functionality instruction(s) storage 646. In certain implementations, the functionality instructions(s) storage 646 can be embodied in a removable element, such as a subscriber identification module (SIM) card storage, a universal integrated circuit card (UICC) storage, or a removable user identity module (RUIM). In another aspect, the memory 644 can comprise functionality information storage 648, which can include information specific to rendering traffic 136 and context information 134 in accordance with aspects of the disclosure.

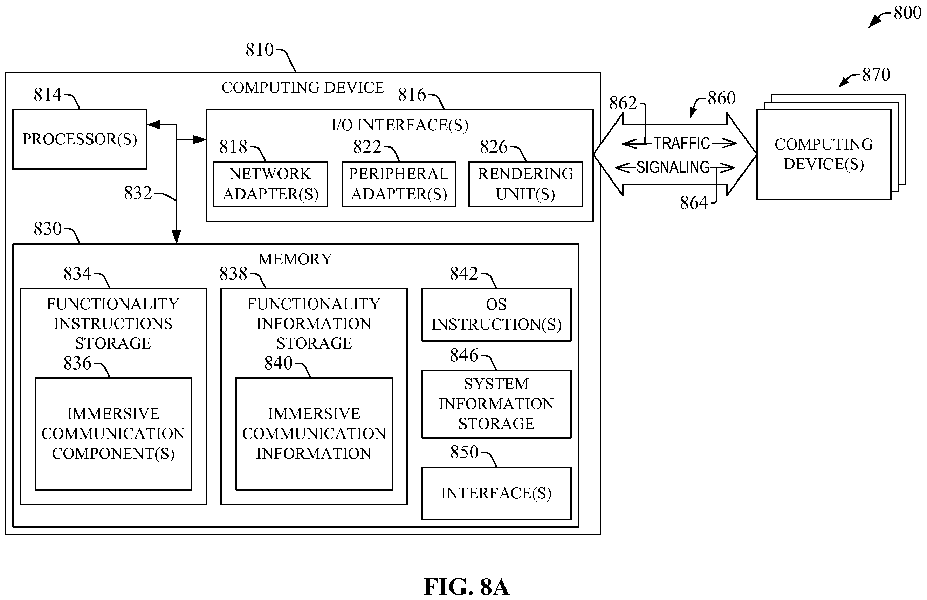

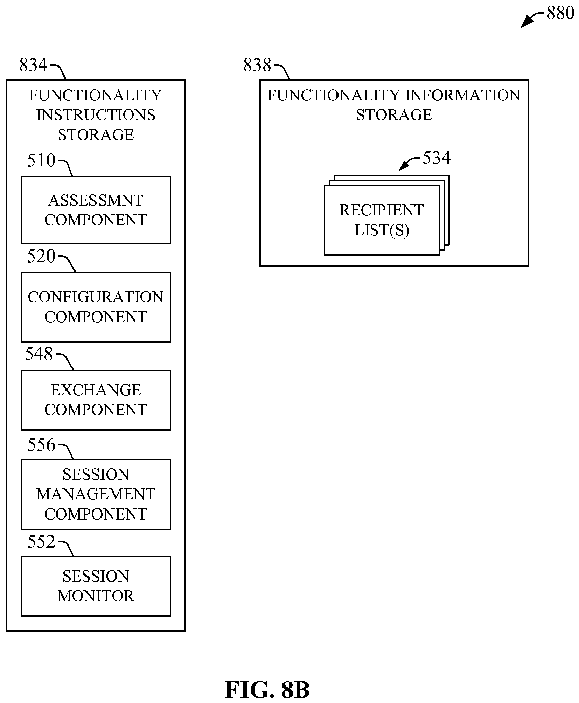

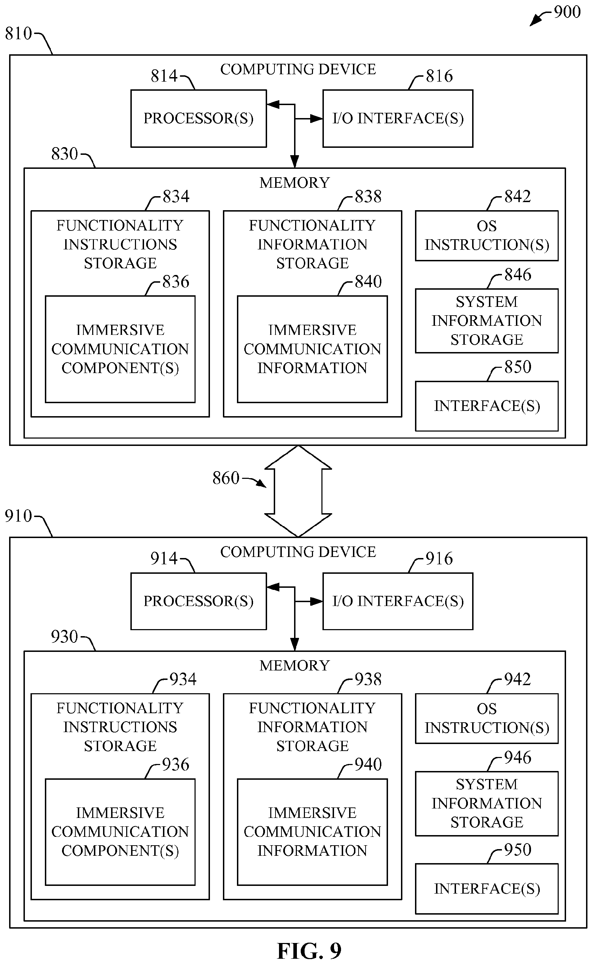

**FIGs. 8A****,** **8B****,** and **9** illustrate block diagrams of example operational environments for context-rich communication between a vehicle and a device in accordance with one or more aspects of the disclosure. These example operational environments are only illustrative and are not intended to suggest or otherwise convey any limitation as to the scope of use or functionality of the operating environments' architecture. In addition, the operational environments should not be interpreted as having any dependency or requirement relating to any one or combination of components illustrated in these example operational environments. These operational environments can embody or can comprise the IVI system 120, or the IVI system 120 and one or more of the devices 130 and 160.

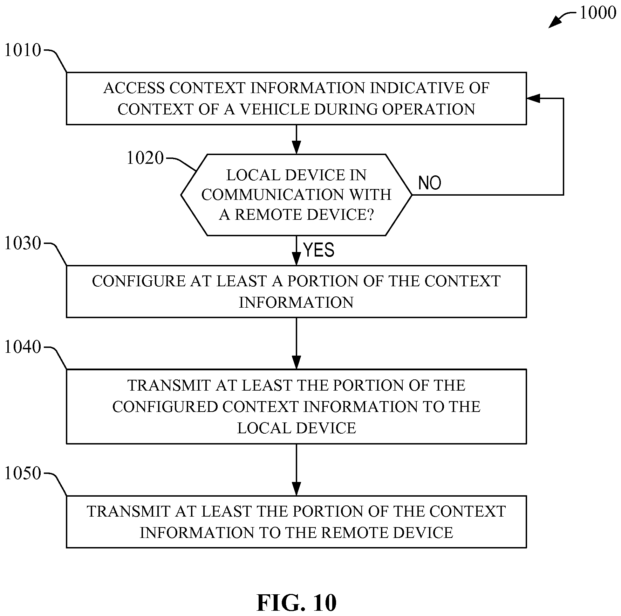

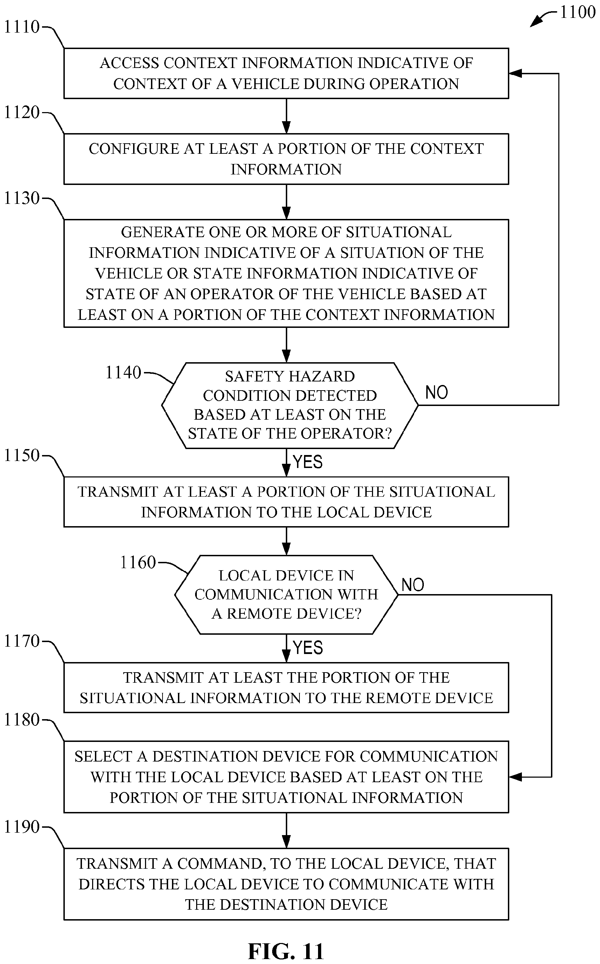

The operational environment 800 represents an example software implementation of the various aspects or features of the disclosure in which the processing or execution of operations described in connection with context-rich communication between a device and a vehicle can be performed in response to execution of one or more software components at the computing device 810. It should be appreciated that the one or more software components can render the computing device 810, or any other computing device that contains such components, a particular machine for context-rich communication between a device and a vehicle in accordance with features described herein, among other functional purposes. A software component can be embodied in or can comprise one or more computer-accessible instructions, e.g., computer-readable and/or computer-executable instructions. In one scenario, at least a portion of the computer-accessible instructions can embody one or more of the example methods presented in **FIGs. 10-11** and various call flows described herein. For instance, to embody one such method, at least the portion of the computer-accessible instructions can be persisted (e.g., stored, made available, or stored and made available) in a computer storage non-transitory medium and executed by a processor. The one or more computer-accessible instructions that embody a software component can assembled into one or more program modules, for example, that can be compiled, linked, and/or executed at the computing device 810 or other computing devices. Generally, such program modules comprise computer code, routines, programs, objects, components, information structures (e.g., data structures and/or metadata structures), etc., that can perform particular tasks (e.g., one or more operations) in response to execution by one or more processors, which can be integrated into the computing device 810 or functionally coupled thereto.

The various example embodiments of the disclosure can be operational with numerous other general purpose or special purpose computing system environments or configurations. Examples of well-known computing systems, environments, and/or configurations that can be suitable for implementation of various aspects or features of the disclosure in connection with context-rich (or immersive) communication between a device and a vehicle can comprise personal computers; server computers; laptop devices; handheld computing devices, such as mobile tablets; wearable computing devices; and multiprocessor systems. Additional examples can include set-top boxes, programmable consumer electronics (such as computing-capable televisions), network PCs, minicomputers, mainframe computers, blade computers, programmable logic controllers, distributed computing environments that comprise any of the above systems or devices, and the like.

As illustrated, the computing device 810 can comprise one or more processors 814, one or more input/output (I/O) interfaces 816, a memory 830, and a bus architecture 832 (also termed bus 832) that functionally couples various functional elements of the computing device 810. In addition, the computing device 810 can include a radio unit (not shown) that can permit wireless communication. Such radio unit can include one or more antennas and a communication processing unit in accordance with aspects described herein in connection with the radio unit 636. The bus 832 can include at least one of a system bus, a memory bus, an address bus, or a message bus, and can permit exchange of information (data, metadata, and/or signaling) between the processor(s) 814, the I/O interface(s) 816, and/or the memory 830, or respective functional element therein. In certain scenarios, the bus 832 in conjunction with one or more internal programming interfaces 850 (also referred to as interface(s) 850) can permit such exchange of information. In scenarios in which processor(s) 814 include multiple processors, the computing device 810 can utilize parallel computing.

The I/O interface(s) 816 permit communication of information between the computing device and an external device, such as another computing device, e.g., a network element or an end-user device. Such communication can include direct communication or indirect communication, such as exchange of information between the computing device 810 and the external device via a network or elements thereof. As illustrated, the I/O interface(s) 816 can comprise one or more of network adapter(s) 818, peripheral adapter(s) 822, and rendering unit(s) 826. Such adapter(s) can permit or facilitate connectivity between the external device and one or more of the processor(s) 814 or the memory 830. In one aspect, at least one of the network adapter(s) 818 can couple functionally the computing device 810 to one or more computing devices 870 via one or more traffic and signaling pipes 860 that can permit or facilitate exchange of traffic 862 and signaling 864 between the computing device 810 and the one or more computing devices 870. Such network coupling provided at least in part by the at least one of the network adapter(s) 818 can be implemented in a wired environment, a wireless environment, or both. The information that is communicated by the at least one network adapter can result from implementation of one or more operations in a method of the disclosure. Such output can be any form of visual representation, including, but not limited to, textual, graphical, animation, audio, tactile, and the like. In certain scenarios, each of the computing device(s) 870 can have substantially the same architecture as the computing device 810. In addition or in the alternative, the rendering unit(s) 826 can include functional elements (e.g., lights, such as light-emitting diodes; a display, such as liquid crystal display (LCD), an electrochromic display, a plasma display, or the like; combinations thereof; or the like) that can permit control of the operation of the computing device 810, or can permit conveying or revealing operational conditions of the computing device 810.

In one aspect, the bus 832 represents one or more of several possible types of bus structures, including a memory bus or memory controller, a peripheral bus, an accelerated graphics port, and a processor or local bus using any of a variety of bus architectures. As an illustration, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI) bus, a PCI-Express bus, a Personal Computer Memory Card Industry Association (PCMCIA) bus, a Universal Serial Bus (USB), and the like. The bus 832, and all buses described herein can be implemented over a wired or wireless network connection and each of the subsystems, including the processor(s) 814, the memory 830 and memory elements therein, and the I/O interface(s) 816 can be contained within one or more remote computing devices 870 at physically separate locations, connected through buses of this form, in effect implementing a fully distributed system.

The computing device 810 can comprise a variety of computer-readable media. Computer-readable media can be any available media (transitory and non-transitory) that can be accessed by a computing device. In one aspect, computer-readable media can comprise computer non-transitory storage media (or computer-readable non-transitory storage media) and communications media. Example computer-readable non-transitory storage media can be any available media that can be accessed by the computing device 810, and can comprise, for example, both volatile and non-volatile media, and removable and/or non-removable media. In one aspect, the memory 830 can comprise computer-readable media in the form of volatile memory, such as random access memory (RAM), and/or non-volatile memory, such as read-only memory (ROM).

The memory 830 can comprise functionality instructions storage 834 and functionality information storage 838. The functionality instructions storage 834 can comprise computer-accessible instructions that, in response to execution (by at least one of the processor(s) 814), can implement one or more of the functionalities of the disclosure. The computer-accessible instructions can embody or can comprise one or more software components illustrated as immersive communication component(s) 836. In one scenario, execution of at least one component of the immersive communication component(s) 836 can implement one or more of the example methods 1000 through 1100. For instance, such execution can cause a processor that executes the at least one component to carry out a disclosed example method. It should be appreciated that, in one aspect, a processor of the processor(s) 814 that executes at least one of the immersive communication component(s) 836 can retrieve information from or retain information in a memory element 840 (labeled as immersive communication information 840) in the functionality information storage 838 in order to operate in accordance with the functionality programmed or otherwise configured by the immersive communication component(s) 836. Such information can include at least one of code instructions, information structures, or the like. At least one of the one or more interfaces 850 (e.g., application programming interface(s)) can permit or facilitate communication of information between two or more components within the functionality instructions storage 834. The information that is communicated by the at least one interface can result from implementation of one or more operations in a method of the disclosure. In certain embodiments, one or more of the functionality instructions storage 834 and the functionality information storage 838 can be embodied in or can comprise removable/non-removable, and/or volatile/non-volatile computer storage media.

At least a portion of at least one of the immersive communication component(s) 836 or immersive communication information 840 can program or otherwise configure one or more of the processors 814 to operate at least in accordance with the functionality described herein. In one embodiment, e.g., embodiment 880 in **FIG. 8B**, the immersive communication component(s) 836 contained in the functionality instruction(s) storage 834 can include the assessment component 510, the configuration component 520, the exchange component 548, the session management component 556, and the session monitor 552. It should be recognized that in such embodiment, hardware or firmware functional elements of the exchange component 548 can be embodied in suitable components of the computing device 810. For instance, at least one of the processors 814 and at least one of the I/O interface(s) 816 can embody a communication unit of the exchange component 548 (see, e.g., **FIG. 5**). In addition, in embodiment 880, the functionality information storage 838 can comprise the recipient list(s) 534. One or more of the processor(s) 814 can execute at least one of such components and leverage at least a portion of the information in the functionality information storage 838 in order to provide context-rich communication between a device and a vehicle in accordance with one or more aspects described herein.

It should be appreciated that, in certain scenarios, the functionality instruction(s) storage 834 can embody or can comprise a computer-readable non-transitory storage medium having computer-accessible instructions that, in response to execution, cause at least one processor (e.g., one or more of the processor(s) 814) to perform a group of operations comprising the operations or blocks described in connection with the disclosed methods.

In addition, the memory 830 can comprise computer-accessible instructions and information (e.g., data and/or metadata) that permit or facilitate operation and/or administration (e.g., upgrades, software installation, any other configuration, or the like) of the computing device 810. Accordingly, as illustrated, the memory 830 can comprise a memory element 842 (labeled OS instruction(s) 842) that contains one or more program modules that embody or include one or more operating systems (OSs), such as Windows operating system, Unix, Linux, Symbian, Android, Chromium, and substantially any OS suitable for mobile computing devices or tethered computing devices. In one aspect, the operational and/or architecture complexity of the computing device 810 can dictate a suitable OS. The memory 830 also comprises a system information storage 846 having data and/or metadata that permits or facilitate operation and/or administration of the computing device 810. Elements of the OS instruction(s) 842 and the system information storage 846 can be accessible or can be operated on by at least one of the processor(s) 814.

It should be recognized that while the functionality instructions storage 834 and other executable program components, such as the operating system instruction(s) 842, are illustrated herein as discrete blocks, such software components can reside at various times in different memory components of the computing device 810, and can be executed by at least one of the processo(s) 814. In certain scenarios, an implementation of the immersive communication component(s) 836 can be retained on or transmitted across some form of computer-readable media.

The computing device 810 and/or one of the computing device(s) 870 can include a power supply (not shown), which can power up components or functional elements within such devices. The power supply can be a rechargeable power supply, e.g., a rechargeable battery, and it can include one or more transformers to achieve a power level suitable for operation of the computing device 810 and/or one of the computing device(s) 870, and components, functional elements, and related circuitry therein. In certain scenarios, the power supply can be attached to a conventional power grid to recharge and ensure that such devices can be operational. In one aspect, the power supply can include an I/O interface (e.g., one of the network adapter(s) 818) to connect operationally to the conventional power grid. In another aspect, the power supply can include an energy conversion component, such as a solar panel, to provide additional or alternative power resources or autonomy for the computing device 810 and/or one of the computing device(s) 870.

The computing device 810 can operate in a networked environment by utilizing connections to one or more remote computing devices 870. As an illustration, a remote computing device can be a personal computer, a portable computer, a server, a router, a network computer, a peer device or other common network node, and so on. As described herein, connections (physical and/or logical) between the computing device 810 and a computing device of the one or more remote computing devices 870 can be made via one or more traffic and signaling pipes 860, which can comprise wireline link(s) and/or wireless link(s) and several network elements (such as routers or switches, concentrators, servers, and the like) that form a local area network (LAN) and/or a wide area network (WAN). Such networking environments are conventional and commonplace in dwellings, offices, enterprise-wide computer networks, intranets, local area networks, and wide area networks.

In one or more embodiments, such as example embodiment 900 shown in **FIG. 9**, one or more of the disclosed methods can be practiced in distributed computing environments, such as grid-based environments, where tasks can be performed by remote processing devices (computing device(s) 870) that are functionally coupled (e.g., communicatively linked or otherwise coupled) through a network having traffic and signaling pipes and related network elements. In a distributed computing environment, in one aspect, one or more software components (such as program modules) can be located in both a local computing device 810 and at least one remote computing device, such as computing device 910. As illustrated and described herein, the at least one remote computing device (e.g., computing device 910) can have substantially the same architecture and associated functionality as the computing device 810. For instance, the computing device 910 can comprise processor(s) 914, I/O interface(s) 916, and a memory 930, where a bus architecture (illustrated with arrows) can couple functionally two or more of such elements. In addition, the computing device 910 can include a radio unit (not shown) that can permit wireless communication. Such radio unit can include one or more antennas and a communication processing unit in accordance with aspects described herein in connection with the radio unit 636. The memory 930 can comprise a functionality instructions storage 934 having one or more immersive communication component(s) 936, and a functionality information storage 938 having immersive communication information 940. The memory 930 also can comprise OS instruction(s) 942 and system information storage 946 that can permit, at least in part, operation and/or administration of the computing device 910. One or more internal programming interfaces 950 (represented as interface(s) 950 in **FIG. 9**) can permit or facilitate the exchange of information between the immersive communication component(s) 936 and the functionality information storage 938. In a scenario in which several components are present in the group of immersive communication component(s) 936, at least one interface of the interface(s) 950 can permit or facilitate the exchange of information between at least two of such components.

In one implementation, the computing device 810 can embody or can comprise the exchange component 548, the configuration component 520, and the exchange component 250, and the computing device 910 can embody or can comprise the session component 556 and the session monitor 552. Other distribution of the exchange component 548, the configuration component 520, the exchange component 548, the session management component 556, and the session monitor 552 can be implemented. Similarly, the recipient list(s) 534 also can be distributed between the computing device 810 and the computing device 910.

In certain implementations, the computational environments 800 and 900 can embody or can comprise a system for safe communication in accordance with at least certain aspects of the disclosure. Such system can comprise at least one memory storage (e.g., functionality instructions storage 934) having encoded there on computer-executable instructions; and at least one processor (e.g., processor(s) 814 or processor(s) 914) functionally coupled to the at least one memory device and configured, by the computer-executable instructions, to access context information indicative of context of a vehicle during operation, to determine if a local device is in communication with a remote device, and in response to the local device being in communication with the remote device, to (i) configure at least a portion of the context information at the system and (ii) transmit at least the portion of the configured context information to the local device, where the portion of the configured context information is or comprises the portion of context information that is configured. In one aspect, the at least one processor can be further configured to transmit at least the portion of the configured context information to the remote device in response to ascertaining that the local device is in communication with the remote device. In another aspect, the at least one processor can be further configured to generate situational information indicative of state of an operator of the vehicle based at least in part on a portion of the context information. In yet another aspect, the at least one processor can be further configured to transmit at least a portion of the situational information to the local device. In still another aspect, the at least one processor can be further configured to generate a recommendation for one or more of speech delivery to the remote device or speech reception from the remote device.

In another aspect, the at least one processor can be further configured to determine an amount of communication resources available to the remote device prior to the transmitting. In addition or in the alternative, the at least one processor can be further configured to configure at least the portion of the context information based at least in part on the amount of communication resources. In yet another aspect, the at least one processor can be further configured to select at least the portion of the context information that is transmitted to the local device. In still another aspect, the at least one processor can be further configured to receive at least a portion of the information from a sensor configured to probe performance of the vehicle. In another aspect, the at least one processor can be further configured to receive at least a portion of the information from a camera configured to monitor performance of the vehicle. In another aspect, the at least one processor can be further configured to receive at least a portion of the context information from at least one sensor and at least one camera, each of the at least one sensor is configured to probe performance of the vehicle and each of the at least one camera is configured to monitor an environment of the vehicle. In yet another aspect, the at least one processor can be further configured to transmit a content stream generated at least in part from information received from a camera of the at least one camera. In still another aspect, the at least one processor can be further configured to transmit a content stream generated at least in part from information received from a sensor of the at least one sensor, the content stream comprises a stereophonic audio signal.

In one aspect, the at least one processor can be further configured to identify information indicative of an entity within the context information. In addition or in the alternative, the processor is further configured to transmit the information indicative of the entity. In another aspect, the at least one processor can be further configured to select a destination device for communication with the local device based at least on the portion of the information in response to the local device not being in communication with the remote device, and wherein the at least one processor selects the destination device from a plurality of prior configured destination devices associated with an operator of the vehicle.

In certain implementations, the at least one processor can be further configured to transmit a command to the local device. In one aspect, the command can direct the local device to initiate a communication session with the destination device. In another aspect, the command can direct the local device to transmit a message to the destination device.

In view of the aspects described herein, example methods that can be implemented in accordance with the disclosure can be better appreciated with reference to the flowcharts in **FIGs. 10-11**. For purposes of simplicity of explanation, the example methods disclosed herein are presented and described as a series of blocks (with each block representing an action or an operation in a method, for example). However, it is to be understood and appreciated that the disclosed methods are not limited by the order of blocks and associated actions or operations, as some blocks may occur in different orders and/or concurrently with other blocks from that are shown and described herein. For example, the various methods or processes of the disclosure can be alternatively represented as a series of interrelated states or events, such as in a state diagram. Furthermore, not all illustrated blocks, and associated action(s), may be required to implement a method in accordance with one or more aspects of the disclosure. Further yet, two or more of the disclosed methods or processes can be implemented in combination with each other, to accomplish one or more features or advantages described herein.

It should be appreciated that the methods of the disclosure can be retained on an article of manufacture, or computer-readable medium, to permit or facilitate transporting and transferring such methods to a computing device (e.g., a desktop computer; a mobile computer, such as a tablet, or a smartphone; a gaming console, a mobile telephone; a blade computer; a programmable logic controller, and the like) for execution, and thus implementation, by a processor of the computing device or for storage in a memory thereof or functionally coupled thereto. In one aspect, one or more processors, such as processor(s) that implement (e.g., execute) one or more of the disclosed methods, can be employed to execute code instructions retained in a memory, or any computer- or machine-readable medium, to implement the one or more methods. The code instructions can provide a computer-executable or machine-executable framework to implement the methods described herein.

**FIGs. 10-11** present flowcharts of example methods 1000 and 1100, respectively, for communication between a device in a vehicle and a remote device in accordance with at least certain aspects of the disclosure. One or more computing devices having at least one processor or being functionally coupled to at least one processor can implement (e.g., compile, execute, compile and execute, etc.) one or more blocks of the subject example method 1100. In other scenarios, one or more blocks of the example method 1100 can be implemented in a distributed fashion by two or more computing devices contained in a system. Each of the two or more computing devices can have at least one processor or can be functionally coupled to at least one processor, where such processor(s) can implement at least one of the one or more blocks.

Regarding example method 1000, at block 1010, context information indicative of context of a vehicle during operation is accessed (e.g., received, retrieved, or otherwise acquired). As described herein, in one aspect, context can comprise one or more of state information indicative of state of an occupant of the vehicle (e.g., the operator(s) of the vehicle), or situational information indicative of features of an environment in which the vehicle operates. Block 1010 can be referred to as an accessing operation and, in one aspect, can comprise receiving at least a portion of the information from a sensor (e.g., one or more of probes 110₁-110₆) configured to probe performance of the vehicle. In another aspect, the accessing operation can comprise receiving at least a portion of the information from a camera configured to monitor performance of the vehicle. In yet another aspect, the accessing operation can comprise receiving at least a portion of the context information from one or more sensors and one or more cameras. Each of the one or more sensors can be configured to probe performance of the vehicle, and each of the one or more cameras can be configured to monitor an environment of the vehicle.

At block 1020, it is determined if the device in the vehicle-referred to as local device-is in communication with the device remote to the vehicle-referred to as a remote device. In the negative case, flow is directed to block 1010. In the alternative, in response to ascertaining that the local device is in communication with the remote device, at least a portion of the context information is configured at block 1030. In one aspect, block 1030 can be referred to as a configuring operation (or action) and can comprise compressing at least a portion of the accessed context information. In another aspect, the configuring operation can include excluding certain portion of the access information. In yet another aspect, the configuring operation can comprise identifying information indicative of an entity within the context information. The entity can be a living entity or a non-living entity. The entity can be identified according to at least one of several computer-vision techniques for object recognition.

Performing the configuring operation after the determining operation (block 1020) can reduce processing load in the device that performs the configuring in scenarios in which the local device is not in communication with the remote device. Yet, it should be appreciated that in certain implementations, the configuring operation can be performed prior to the determining operation.

At block 1040, at least a portion of the context information that is configured (also referred to as the configured context information) can be transmitted to the local device. In addition, at least the portion of the context information is transmitted to the remote device at block 1050. In certain embodiments, the example method 1000 can comprise a block (not shown) at which an amount of communication resources (e.g., available bandwidth, specific number of channels, and the like) available to the remote device are determined prior to the configuring operation. In one of such embodiments, in one aspect, the configuring operation comprises configuring at least the portion of the context information based at least in part on the amount of communication resources.

As described herein, the accessed information can comprise information (e.g., data and/or signaling) received or otherwise acquired from one or more cameras and, in certain implementations, the transmitting operation can comprise transmitting a content stream generated at least in part from information received from a camera of the one or more cameras. The content stream can be formatted according to various motion-picture formats such as motion picture experts group (MPEG), H.264, or the like. In one embodiment, the content stream can be generated in response to implementation of the configuring operation. In another embodiment, the information can embody the content stream, which can be streamed (e.g., generated and transmitted) to the local device without any prior configuration. Such content stream can be referred to as a raw feed. Similarly, the accessed information can comprise information received or otherwise acquired from one or more sensors and, in one implementation, the transmitting operation can comprise transmitting a content stream generated at least in part from information received from a sensor of the one or more sensors. In one aspect, the content stream (e.g., a video stream or an audio stream) can comprise a stereophonic audio signal. Such signal can be composed or otherwise generated in response to implementation of the configuring operation.

As described herein, in certain embodiments, information indicative or representative of various entities can be extracted from the accessed information in response to implementation of the configuring operation. These entities can comprise, for example, humans, which can include pedestrians; animals (live or diseased); animate objects; inanimate object; a combination thereof; or the like. In such embodiments, at one or more of blocks 1040 and 1050, the transmitting operation can comprise transmitting at least a portion of the information indicative of the entity to the remote device. It should be appreciated that transmission of such information can permit the remote device to render potential road hazards and thus permit an end-user of the remote device to regulate delivery of speech accordingly.

Regarding example method 1100, block 1110 is substantially the same as block 1010, and block 1120 is substantially the same as block 1030. At block 1130, one or more of situational information indicative of a situation of the vehicle or state information indicative of state of an operator of the vehicle or state information indicative of state of an occupant of the vehicle can be generated based at least on a portion of context information that is accessed (e.g., received or otherwise acquired) at block 1110. Block 1130 can be referred to as a generating operation and, in one aspect, can comprise inferring that the state of the operator corresponds to that of an operator who is fatigued and/or drowsy. In another aspect, as described herein, the generating information can comprise inferring a hazardous situation not recognizable from analysis of imaging data obtained from a front-facing camera in the vehicle. For example, such situation can be inferred from information received from at least one sensor, such as a sonar sensor and/or a navigation sensor (e.g., a satellite navigation receiver). In one scenario, the sonar sensor and the navigation sensor can supply information indicative of a street crossing with traffic light(s) in the route of the vehicle, and the sonar sensor can supply information indicative of another vehicle behind the vehicle and in proximity or in moving in a passing lane. In yet another aspect, the generating operation can include operating on the at least the portion of the context information and, in response, generating an information structure indicative of the situational information. For instance, the information structure can be a data object (such as a scalar metric, a vector metric, etc.) that is indicative or otherwise representative of operating condition(s) of the vehicle, location of the vehicle, and/or environmental feature(s) (e.g., presence of other vehicles; presence of pedestrians; specific terrain, such as dirt road, proximity to an intersection, highway road; or the like).

At block 1140, it is determined if a safety hazard condition is detected based at least on the state of the operator. In one aspect, at least to determine the presence of the safety hazard condition and thus detect it, at least the state of the operator can be analyzed to ascertain that such state satisfies at least one safety criterion or it fails to satisfy the at least one safety criterion. As described herein, one or more safety criteria can be retained in a repository (e.g., repository 530) or any other memory device functionally coupled to or integrated into one or more computing devices that implement the subject example method 1100. In addition, the one or more safety criteria can be can be embodied in or can include, for example, a frequency of swerving that is above a predetermined threshold; an inter-vehicle distance below recommended safety guidelines (e.g., 10 meters per 10 Km/h in vehicle velocity) that is sustained for a predetermined period; elevated frequency (e.g., frequency above a threshold) of switching between periods of acceleration and deceleration; sustained speed significantly above a speed limit; a combination thereof; or the like. In a scenario in which the safety hazard condition is not detected, flow is directed to block 1110 and context information is further accessed. Yet, in a scenario in which it is ascertained that the safety hazard condition is detected, the method flow is directed to block 1150 at which at least a portion of the situational information is transmitted to the local device. Similarly to block 1020, at block 1160, it is determined if the local device is in communication with the remote device. In the affirmative case, at least a portion of the situational information is transmitted to the remote device at block 1170. In the alternative case, flow is directed to block 1180 at which a destination device is selected for communication with the local device based at least on the portion of the situational information. The destination device is remotely located with respect to the vehicle and can be selected from a plurality of prior configured destination devices associated with the operator of the vehicle.

At block 1190, a command that directs the local device to communicate with the destination device is transmitted to the local device. In one implementation, the command can direct the local device (e.g., device 130) to initiate a communication session, such as a voice call, with the destination device. In another implementation, the command can direct the local device (e.g., device 130) to transmit a message to the destination device. As described herein, the message can be embodied in or can comprise one or more of a USSD message, a SMS message, or an MMS message. In addition or in the alternative, the message can be conveyed within dedicated signaling.

Several advantages over conventional technologies for communication between a device and vehicle emerge from the present specification and annexed drawings. One example advantage is that a remote device in communication with a local device within the vehicle can render (e.g., display a motion-picture segment, such as a streamed video), emulate, or otherwise generate a representation of the context of the vehicle, e.g., vehicle performance, vehicle environment, behavior of an occupant of the vehicle, or the like. As described herein, generation of such representation can permit an end-user of the remote device in communication with the vehicle to transmit information to the local device in a manner that accounts for such context.

Various embodiments of the disclosure may take the form of an entirely or partially hardware embodiment, an entirely or partially software embodiment, or a combination of software and hardware (e.g., a firmware embodiment). Furthermore, as described herein, various embodiments of the disclosure (e.g., methods and systems) may take the form of a computer program product comprising a computer-readable non-transitory storage medium having computer-accessible instructions (e.g., computer-readable and/or computer-executable instructions) such as computer software, encoded or otherwise embodied in such storage medium. Those instructions can be read or otherwise accessed and executed by one or more processors to perform or permit performance of the operations described herein. The instructions can be provided in any suitable form, such as source code, compiled code, interpreted code, executable code, static code, dynamic code, assembler code, combinations of the foregoing, and the like. Any suitable computer-readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read only memory (ROM); random access memory (RAM); magnetic disk storage media; optical storage media; flash memory, etc.

Embodiments of the operational environments and methods (or techniques) are described herein with reference to block diagrams and flowchart illustrations of methods, systems, apparatuses and computer program products. It can be understood that each block of the block diagrams and flowchart illustrations, and combinations of blocks in the block diagrams and flowchart illustrations, respectively, can be implemented by computer-accessible instructions. In certain implementations, the computer-accessible instructions may be loaded or otherwise incorporated into onto a general purpose computer, special purpose computer, or other programmable information processing apparatus to produce a particular machine, such that the operations or functions specified in the flowchart block or blocks can be implemented in response to execution at the computer or processing apparatus.

Unless otherwise expressly stated, it is in no way intended that any protocol, procedure, process, or method set forth herein be construed as requiring that its acts or steps be performed in a specific order. Accordingly, where a process or method claim does not actually recite an order to be followed by its acts or steps or it is not otherwise specifically recited in the claims or descriptions of the subject disclosure that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification or annexed drawings, or the like.

As used in this application, the terms "component," "environment," "system," "architecture," "interface," "unit," "module," and the like are intended to refer to a computer-related entity or an entity related to an operational apparatus with one or more specific functionalities. Such entities may be either hardware, a combination of hardware and software, software, or software in execution. As an example, a component may be, but is not limited to being, a process running on a processor, a processor, an object, an executable portion of software, a thread of execution, a program, and/or a computing device. For example, both a software application executing on a computing device and the computing device can be a component. One or more components may reside within a process and/or thread of execution. A component may be localized on one computing device or distributed between two or more computing devices. As described herein, a component can execute from various computer-readable non-transitory media having various data structures stored thereon. Components can communicate via local and/or remote processes in accordance, for example, with a signal (either analog or digital) having one or more data packets (e.g., data from one component interacting with another component in a local system, distributed system, and/or across a network such as a wide area network with other systems via the signal). As another example, a component can be an apparatus with specific functionality provided by mechanical parts operated by electric or electronic circuitry that is controlled by a software application or firmware application executed by a processor, wherein the processor can be internal or external to the apparatus and can execute at least a part of the software or firmware application. As yet another example, a component can be an apparatus that provides specific functionality through electronic components without mechanical parts, the electronic components can include a processor therein to execute software or firmware that confers at least in part the functionality of the electronic components. An interface can include input/output (I/O) components as well as associated processor, application, and/or other programming components. The terms "component," "environment," "system," "architecture," "interface," "unit," "module" can be utilized interchangeably and can be referred to collectively as functional elements.

In the present specification and annexed drawings, reference to a "processor" is made. As utilized herein, a processor can refer to any computing processing unit or device comprising single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit (IC), an application-specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. A processor can be implemented as a combination of computing processing units. In certain embodiments, processors can utilize nanoscale architectures such as, but not limited to, molecular and quantum-dot based transistors, switches and gates, in order to optimize space usage or enhance performance of user equipment.

In addition, in the present specification and annexed drawings, terms such as "store," storage," "data store," "data storage," "memory," "repository," and substantially any other information storage component relevant to operation and functionality of a component of the disclosure, refer to "memory components," entities embodied in a "memory," or components forming the memory. It can be appreciated that the memory components or memories described herein embody or comprise non-transitory computer storage media that can be readable or otherwise accessible by a computing device. Such media can be implemented in any methods or technology for storage of information such as computer-readable instructions, information structures, program modules, or other information objects. The memory components or memories can be either volatile memory or non-volatile memory, or can include both volatile and non-volatile memory. In addition, the memory components or memories can be removable or non-removable, and/or internal or external to a computing device or component. Example of various types of non-transitory storage media can comprise hard-disc drives, zip drives, CD-ROM, digital versatile disks (DVD) or other optical storage, magnetic cassettes, magnetic tape, magnetic disk storage or other magnetic storage devices, flash memory cards or other types of memory cards, cartridges, or any other non-transitory medium suitable to retain the desired information and which can be accessed by a computing device.

As an illustration, non-volatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The disclosed memory components or memories of operational environments described herein are intended to comprise one or more of these and/or any other suitable types of memory.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language generally is not intended to imply that features, elements, and/or operations are in any way required for one or more implementations or that one or more implementations necessarily include logic for deciding, with or without user input or prompting, whether these features, elements, and/or operations are included or are to be performed in any particular implementation.

What has been described herein in the present specification and annexed drawings includes examples of systems, devices, and techniques that can provide a context-rich communication between a device and a vehicle. It is, of course, not possible to describe every conceivable combination of elements and/or methods for purposes of describing the various features of the disclosure, but it can be recognized that many further combinations and permutations of the disclosed features are possible. Accordingly, it may be apparent that various modifications can be made to the disclosure without departing from the scope thereof. In addition or in the alternative, other embodiments of the disclosure may be apparent from consideration of the specification and annexed drawings, and practice of the disclosure as presented herein. It is intended that the examples put forward in the specification and annexed drawings be considered, in all respects, as illustrative and not restrictive. Although specific terms are employed herein, they are used in a generic and descriptive sense only and not for purposes of limitation.

## Claims

1. At least one computer-readable non-transitory storage medium encoded with computer-accessible instructions that, in response to execution, cause at least one processor to perform operations (1000) for communication comprising:
accessing (1010), at an in-vehicle computing system (120) having at least one processor, context information (134) indicative of context of a vehicle (104) during operation;
determining (1020), at the computing system, if a local device (130) is in communication with a remote device (160), the communication comprising communication between a vehicular communicator using the local device and a remote communicator using the remote device; and
in response to ascertaining that the local device is in communication with the remote device, configuring (1030) at least a portion of the context information at the computing system, and
transmitting (1040), at the computing system, at least the portion of the context information to the local device.

2. The at least one computer-readable non-transitory storage medium of claim 1, further comprising generating, at the computing system, one or more of situational information indicative of at least the situation of the vehicle or state information indicative of at least the state of an operator of the vehicle based at least in part on a portion of the context information.

3. The at least one computer-readable non-transitory storage medium of claim 2, further comprising generating, at the computing system, a recommendation for one or more of speech delivery to the remote device or speech reception from the remote device.

4. The at least one computer-readable non-transitory storage medium of claim 3, wherein the generating comprises selecting, at the computing system, at least the portion of the context information that is transmitted to the local device.

5. The at least one computer-readable non-transitory storage medium of claim 1, wherein the accessing comprises receiving, at the computing system, at least a portion of the context information from at least one sensor and at least one camera, each of the at least one sensor is configured to probe performance of the vehicle and each of the at least one camera is configured to monitor an environment of the vehicle.

6. The at least one computer-readable non-transitory storage medium of any one of claims 1-5, wherein the transmitting comprises transmitting a content stream generated at least in part from information received from a sensor of the at least one sensor, the content stream comprises a stereophonic audio signal.

7. A device comprising:
means for accessing (1010) context information indicative of at least one of context of a vehicle (104) during operation or context of an occupant of the vehicle,
means for determining (1020) if a local device (130) is in communication with a remote device (160), the communication comprising communication between a vehicular communicator using the local device and a remote communicator using the remote device; and
in response to the local device being in communication with the remote device:
means for configuring (1030) at least a portion of the context information at a system, and
means for transmitting (1040) at least the portion of the context information to the local device.

8. The device of claim 7, further comprising means for transmitting (1050) at least the portion of the context information to the remote device in response to ascertaining that the local device is in communication with the remote device.

9. The device of claim 7, further comprising means for selecting at least the portion of the context information that is transmitted to the local device.

10. The device of claim 7, further comprising means for receiving at least a portion of the context information from at least one sensor and at least one camera, further comprising means for probing performance of the vehicle and monitoring an environment of the vehicle.

11. The device of claim 10, further comprising means for transmitting a content stream generated at least in part from information received from a sensor of the at least one sensor, the content stream comprises a stereophonic audio signal.

12. The device of claim 7, further comprising means for selecting a destination device for communication with the local device based at least on the portion of the information in response to the local device not being in communication with the remote device, and further comprising means for selecting the destination device from a plurality of prior configured destination devices associated with an operator of the vehicle.

13. The device of any one of claims 7-12, further comprising means for transmitting a command to the local device, the command directing the local device to initiate a communication session with the destination device.

## Patentansprüche

1. Computerlesbares nicht flüchtiges Speichermedium oder mehrere computerlesbare nicht flüchtige Speichermedien, die mit computerzugreifbaren Anweisungen codiert mit, die als Reaktion auf eine Ausführung bewirken, dass mindestens ein Prozessor Arbeitsabläufe (1000) zur Kommunikation durchführt, die Folgendes umfassen:
Zugreifen (1010), an einem fahrzeuginternen Datenverarbeitungssystem (120) mit mindestens einem Prozessor, auf Kontextinformationen (134), die einen Kontext eines Fahrzeugs (104) während des Betriebs angeben;
Bestimmen (1020), am Datenverarbeitungssystem, ob sich eine lokale Einrichtung (130) in Kommunikation mit einer Ferneinrichtung (160) befindet, wobei die Kommunikation eine Kommunikation zwischen einem Fahrzeugkommunikator, der die lokale Einrichtung verwendet, und einem Fernkommunikator, der die Ferneinrichtung verwendet, umfasst; und,
als Reaktion auf eine Feststellung, dass sich die lokale Einrichtung in Kommunikation mit der Ferneinrichtung befindet, Konfigurieren (1030) von mindestens einem Teil der Kontextinformationen am Datenverarbeitungssystem und
Übertragen (1040), am Datenverarbeitungssystem, von mindestens dem Teil der Kontextinformationen zur lokalen Einrichtung.

2. Computerlesbares nicht flüchtiges Speichermedium oder mehrere computerlesbare nicht flüchtige Speichermedien nach Anspruch 1, ferner umfassend Erzeugen, am Datenverarbeitungssystem, von Situationsinformationen, die zumindest die Situation des Fahrzeugs angeben, und/oder Zustandsinformationen, die zumindest den Zustand eines Betreibers des Fahrzeugs zumindest teilweise basierend auf einem Teil der Kontextinformationen angeben.

3. Computerlesbares nicht flüchtiges Speichermedium oder mehrere computerlesbare nicht flüchtige Speichermedien nach Anspruch 2, ferner umfassend Erzeugen, am Datenverarbeitungssystem, einer Empfehlung für Sprachübermittlung zur Ferneinrichtung und/oder Sprachempfang von der Ferneinrichtung.

4. Computerlesbares nicht flüchtiges Speichermedium oder mehrere computerlesbare nicht flüchtige Speichermedien nach Anspruch 3, wobei das Erzeugen ein Auswählen, am Datenverarbeitungssystem, von mindestens dem Teil der Kontextinformationen, der zur lokalen Einrichtung übertragen wird, umfasst.

5. Computerlesbares nicht flüchtiges Speichermedium oder mehrere computerlesbare nicht flüchtige Speichermedien nach Anspruch 1, wobei das Zugreifen ein Empfangen, am Datenverarbeitungssystem, von mindestens einem Teil der Kontextinformationen von mindestens einem Sensor und mindestens einer Kamera umfasst, wobei jeder des mindestens einen Sensors dazu konfiguriert ist, eine Leistung des Fahrzeugs zu prüfen, und jede der mindestens einen Kamera dazu konfiguriert ist, eine Umgebung des Fahrzeugs zu überwachen.

6. Computerlesbares nicht flüchtiges Speichermedium oder mehrere computerlesbare nicht flüchtige Speichermedien nach einem der Ansprüche 1-5, wobei das Übertragen ein Übertragen eines Inhaltsstroms umfasst, der zumindest teilweise aus Informationen erzeugt wird, die von einem Sensor des mindestens einen Sensors empfangen werden, wobei der Inhaltsstrom ein stereophones Audiosignal umfasst.

7. Einrichtung, die Folgendes umfasst:
Mittel zum Zugreifen (1010) auf Kontextinformationen, die einen Kontext eines Fahrzeugs (104) während des Betriebs und/oder einen Kontext eines Insassen des Fahrzeugs angeben;
Mittel zum Bestimmen (1020), ob sich eine lokale Einrichtung (130) in Kommunikation mit einer Ferneinrichtung (160) befindet, wobei die Kommunikation eine Kommunikation zwischen einem Fahrzeugkommunikator, der die lokale Einrichtung verwendet, und einem Fernkommunikator, der die Ferneinrichtung verwendet, umfasst; und,
als Reaktion darauf, dass sich die lokale Einrichtung in Kommunikation mit der Ferneinrichtung befindet:
Mittel zum Konfigurieren (1030) von mindestens einem Teil der Kontextinformationen an einem System und
Mittel zum Übertragen (1040) von mindestens dem Teil der Kontextinformationen zur lokalen Einrichtung.

8. Einrichtung nach Anspruch 7, die ferner Mittel zum Übertragen (1050) von mindestens dem Teil der Kontextinformationen zur Ferneinrichtung als Reaktion auf eine Feststellung, dass sich die lokale Einrichtung in Kommunikation mit der Ferneinrichtung befindet, umfasst.

9. Einrichtung nach Anspruch 7, die ferner Mittel zum Auswählen von mindestens dem Teil der Kontextinformationen, der zur lokalen Einrichtung übertragen wird, umfasst.

10. Einrichtung nach Anspruch 7, die ferner Mittel zum Empfangen von mindestens einem Teil der Kontextinformationen von mindestens einem Sensor und mindestens einer Kamera umfasst, die ferner Mittel zum Prüfen einer Leistung des Fahrzeugs und zum Überwachen einer Umgebung des Fahrzeugs umfasst.

11. Einrichtung nach Anspruch 10, die ferner Mittel zum Übertragen eines Inhaltsstroms umfasst, der zumindest teilweise aus Informationen erzeugt wird, die von einem Sensor des mindestens einen Sensors empfangen werden, wobei der Inhaltsstrom ein stereophones Audiosignal umfasst.

12. Einrichtung nach Anspruch 7, die ferner Mittel zum Auswählen einer Zieleinrichtung zur Kommunikation mit der lokalen Einrichtung basierend zumindest auf dem Teil der Informationen, als Reaktion darauf, dass sich die lokale Einrichtung nicht in Kommunikation mit der Ferneinrichtung befindet, umfasst und ferner Mittel zum Auswählen der Zieleinrichtung aus mehreren zuvor konfigurierten Zieleinrichtungen, die mit einem Betreiber des Fahrzeugs assoziiert sind, umfasst.

13. Einrichtung nach einem der Ansprüche 7-12, die ferner Mittel zum Übertragen eines Befehls zur lokalen Einrichtung umfasst, wobei der Befehl die lokale Einrichtung anweist, eine Kommunikationssitzung mit der Zieleinrichtung zu initiieren.

## Revendications

1. Support ou supports de stockage non transitoire lisibles par ordinateur codés avec des instructions accessibles par un ordinateur qui, à la suite d'une exécution, contraignent au moins un processeur à effectuer des opérations (1000) pour une communication consistant :
à avoir accès (1010), au niveau d'un système informatique embarqué (120) ayant au moins un processeur, à des informations de contexte (134) indiquant un contexte d'un véhicule (104) pendant une opération ;
à déterminer (1020), au niveau du système informatique, si un dispositif local (130) est en communication avec un dispositif distant (160), la communication comprenant une communication entre un appareil de communication de véhicule utilisant le dispositif local et un appareil de communication distant utilisant le dispositif distant ; et
à la suite de la vérification que le dispositif local est en communication avec le dispositif distant, à configurer (1030) au moins une partie des informations de contexte au niveau du système informatique et
à transmettre (1040), au niveau du système informatique, au moins la partie des informations de contexte au dispositif local.

2. Support ou supports de stockage non transitoire lisibles par ordinateur selon la revendication 1, consistant en outre à générer, au niveau du système informatique, des informations situationnelles indiquant au moins la situation du véhicule et/ou des informations d'état indiquant au moins l'état d'un opérateur du véhicule en se basant, au moins en partie, sur une partie des informations de contexte.

3. Support ou supports de stockage non transitoire lisibles par ordinateur selon la revendication 2, consistant en outre à générer, au niveau du système informatique, une recommandation pour une distribution de parole au dispositif distant et/ou une réception de parole en provenance du dispositif distant.

4. Support ou supports de stockage non transitoire lisibles par ordinateur selon la revendication 3, dans lequel la génération consiste à sélectionner, au niveau du système informatique, au moins la partie des informations de contexte qui est transmise au dispositif local.

5. Support ou supports de stockage non transitoire lisibles par ordinateur selon la revendication 1, dans lequel l'accès consiste à recevoir, au niveau du système informatique, au moins une partie des informations de contexte en provenance d'au moins un capteur et d'au moins une caméra, le capteur ou chacun des capteurs étant configuré pour sonder des performances du véhicule et la caméra ou chacune des caméras étant configurée pour surveiller un environnement du véhicule.

6. Support ou supports de stockage non transitoire lisibles par ordinateur selon l'une quelconque des revendications 1 à 5, dans lequel la transmission consiste à transmettre un flux de contenu généré, au moins en partie, à partir d'informations reçues d'un capteur du ou des capteurs, le flux de contenu comprend un signal audio stéréophonique.

7. Dispositif comprenant :
des moyens pour avoir accès (1010) à des informations de contexte indiquant un contexte d'un véhicule (104) pendant une opération et/ou un contexte d'un occupant du véhicule ;
des moyens pour déterminer (1020) si un dispositif local (130) est en communication avec un dispositif distant (160), la communication comprenant une communication entre un appareil de communication de véhicule utilisant le dispositif local et un appareil de communication distant utilisant le dispositif distant ; et
à la suite du fait que le dispositif local est en communication avec le dispositif distant :
des moyens pour configurer (1030) au moins une partie des informations de contexte au niveau d'un système et
des moyens pour transmettre (1040) au moins la partie des informations de contexte au dispositif local.

8. Dispositif selon la revendication 7, comprenant en outre des moyens pour transmettre (1050) au moins la partie des informations de contexte au dispositif distant à la suite de la vérification que le dispositif local est en communication avec le dispositif distant.

9. Dispositif selon la revendication 7, comprenant en outre des moyens pour sélectionner au moins la partie des informations de contexte qui est transmise au dispositif local.

10. Dispositif selon la revendication 7, comprenant en outre des moyens pour recevoir au moins une partie des informations de contexte en provenance d'au moins un capteur et d'au moins une caméra, comprenant en outre des moyens pour sonder des performances du véhicule et surveiller un environnement du véhicule.

11. Dispositif selon la revendication 10, comprenant en outre des moyens pour transmettre un flux de contenu généré, au moins en partie, à partir d'informations reçues d'un capteur du ou des capteurs, le flux de contenu comprend un signal audio stéréophonique.

12. Dispositif selon la revendication 7, comprenant en outre des moyens pour sélectionner un dispositif de destination pour une communication avec le dispositif local en se basant au moins sur la partie des informations à la suite du fait que le dispositif local n'est pas en communication avec le dispositif distant et comprenant en outre des moyens pour sélectionner le dispositif de destination parmi une pluralité de dispositifs de destination configurés au préalable associés à un opérateur du véhicule.

13. Dispositif selon l'une quelconque des revendications 7 à 12, comprenant en outre des moyens pour transmettre une commande au dispositif local, la commande ordonnant au dispositif local d'initier une session de communication avec le dispositif de destination.
